# EUROPEAN PATENT APPLICATION

(11) **EP 1 975 027 A1**
(43) Date of publication of application: **01.10.2008**
(21) Application number: 08005178.2
(22) Date of filing: 19.03.2008
(51) Int. Cl.: B60W 20/00, B60K 1/02, B60K 6/442, B60W 10/02, B60W 10/06, B60W 10/08

(54) **Control device, method and computer program of hybrid vehicle**

(30) Priority: 30.03.2007 JP 2007090050; 30.03.2007 JP 2007090049
(71) Applicant: Mazda Motor Corporation, Aki-gun, Hiroshima 730-8670 (JP)
(72) Inventor: Hidetoshi, Nobumoto, Aki-gun, Hiroshima 730-8670 (JP); Kiyotaka, Mamiya, Aki-gun, Hiroshima 730-8670 (JP); Seiji, Esaki, Aki-gun, Hiroshima 730-8670 (JP); Taizou, Shoya, Aki-gun, Hiroshima 730-8670 (JP); Takayuki, Ueda, Aki-gun, Hiroshima 730-8670 (JP)
(74) Representative: Müller-Boré & Partner Patentanwälte

(57) **Abstract**

There are provided a driving-state determination device to determine a driving state of a hybrid vehicle (**1**), and a driving-source selection device to select a driving source from an engine (**10**), a first motor generator (**MG1**), and a second motor generator (**MG2**) based on determination of the driving-state determination device so as to provide the highest driving efficiency as a whole of the vehicle (**1**). Herein, the first and second motor generators (**MG1,MG2**) are configured so that a high-efficiency driving operation area of the first motor generator (**MG1**) is set on a higher-speed side relative to a high-efficiency driving operation area of the second motor generator (**MG2**). Accordingly, there can be provided a control device of a hybrid vehicle that can improve the driving efficiency as a whole of the vehicle properly.

## Description

The present invention relates to a control device, method and computer program product of a hybrid vehicle, and particularly to a control device and method of a hybrid vehicle that can improve an efficiency of regeneration of a power energy, ensuring a necessary driving force, by using two motor generators.

Recently, hybrid vehicles equipped with an engine and a motor have been developed for low emission and energy saving. Japanese Patent Laid-Open Publication No. 2000-295711, for example, discloses a hybrid vehicle equipped with first and second motors, in which the motors function as a driving resource or a generator and that function is selectable in accordance with driving states. The hybrid vehicle disclosed in the patent publication has been invented to improve the energy efficiency by reducing the amount of electricity generation and output of the motors.

In this case where a driving torque is produced and outputted with combination of two motors and an engine, it is preferable that the motors be configured to have different output characteristics from one another to cope with various vehicle driving states. For example, the combination of a motor providing a high efficiency at a relatively high speed area and another motor providing a high efficiency at a relatively low speed area may improve the efficiency as a whole of the vehicle at a wider driving area. The hybrid vehicle of the above-described patent publication, however, discloses nothing about these points.

Meanwhile, U.S. Patent No. 5,289,890 discloses a technology in which two motor generators having different driving efficiency are provided at an identical driving shaft, and the driving efficiency can be improved at both driving areas of a low speed area and a high speed area. This technology is just for application to an electric vehicle (equipped with only a motor as a driving resource), which is not considered for application to the so-called hybrid vehicle equipped with the engine. It is preferable that either one of the motor generators be directly coupled to the engine to enable cranking of the engine in the hybrid vehicle. In this case, there may be provided a first motor generator whose rotational speed is restricted by a rotational speed of an engine shaft, and a second motor generator whose rotational speed is not influenced by the rotational speed of the engine shaft. The above-described US patent publication, however, discloses nothing as to what kind of driving efficient characteristics should be applied to these two motor generators.

The present invention has been devised in view of the above-described matters, and an object of the present invention is to provide a control device and method of a hybrid vehicle that can improve the driving efficiency as a whole of the vehicle properly.

This object is solved by the features of the independent claims. Preferred embodiments of the present invention are subject of the dependent claims.

According to the present invention, there is provided a control device of a hybrid vehicle, comprising an engine operative to output a driving torque to the vehicle, a first motor generator operative to generate electricity and output a driving torque to the vehicle, the first motor generator being (particularly directly) coupled to the engine, a second motor generator operative to generate electricity and output a driving torque to the vehicle, a battery operative to supply electricity to the first and second motor generators, the battery being charged by the first and second motor generators, a driving-state determination device operative to determine a driving state of the vehicle, and a driving-source selection device operative to select a driving source from the engine, the first motor generator, and the second motor generator based on determination of the driving-state determination device so as to provide the highest driving efficiency as a whole of the vehicle, wherein the first and second motor generators are configured so that a high-efficiency driving operation area of the first motor generator is set on a higher-speed side relative to a high-efficiency driving operation area of the second motor generator.

According to the present invention, since the first and second motor generators having different high-efficiency driving operation areas are applied and the driving source is selected by the driving-source selection device so as to provide the highest driving efficiency as a whole of the vehicle, the appropriate selection of the driving source can be provided in accordance with the vehicle driving states, thereby improving the driving efficiency as a whole of the vehicle. Herein, in the first motor generator directly coupled to the engine for the engine cranking, its rotational speed may be generally influenced (restricted) by the rotational speed of the engine shaft during the electricity generation or torque assist. Since the rotational speed of the engine shaft does not lower below an idling speed while the engine operates, the first motor generator operates at a relatively higher-speed driving area relative to the second motor generator. According to the present invention, since the first and second motor generators are further configured so that the high-efficiency driving operation area of the first motor generator is set on the higher-speed side relative to the high-efficiency driving operation area of the second motor generator, the driving efficiency as a whole of the vehicle can be improved further properly, so that a properly efficient electricity generation or torque assist can be provided.

According to an embodiment of the present invention, the engine and the first motor generator are coupled to a driving shaft of the vehicle via a transmission, and the driving-source selection device is configured so as to determine a driving efficiency of the first motor generator and compare that with a driving efficiency of the second motor generator for each speed ratio of the transmission. Thereby, the first motor generator can be used as the driving source for a middle-high speed in which the driving efficiency increases in proportion to the rotational speed of the engine, and comparison with the driving efficiency of the second motor generator can be conducted by determining the high-efficiency operation area that is changeable for each speed ratio. Accordingly, the more accurate appropriate distribution can be attained.

According to another embodiment of the present invention, the control device further comprises a speed-ratio setting device operative to set the speed ratio of the transmission at a specified (predetermined or predeterminable) speed ratio that enables the first motor generator to provide a highest driving efficiency thereof when the driving-source selection device selects the first motor generator as the driving source. Thereby, since the speed ratio is set so as to provide the highest driving efficiency of the first motor generator when the engine is not operated, the driving efficiency as a whole of the vehicle can be further improved.

According to another embodiment of the present invention, the speed-ratio setting device is configured to set the speed ratio of the transmission at a specified (predetermined or predeterminable) speed ratio that enables a fuel-consumption efficiency of the engine to provide a highest efficiency when the driving-source selection device selects the engine and the first motor generator as the driving source without an operation of the engine. Thereby, the fuel-consumption efficiency of the engine has priority in a driving area where the engine operation is needed. Herein, the meaning of "when the driving-source selection device selects the engine and the first motor generator as the driving source" includes a case where the engine and both of the first and second motor generators are selected by the driving-source selection device.

According to another embodiment of the present invention, a motor output shaft of the second motor generator is coupled to an output shaft of the transmission, a first clutch is provided between the first motor generator and the transmission, a second clutch is provided at the motor output shaft of the second motor generator, and there is provided a clutch control device operative to control the first and second clutches so as to disconnect the first clutch when the driving-source selection device selects only the second motor generator as the driving source and to disconnect the second clutch when the driving-source selection device excludes the second motor generator from the driving source. Thereby, in the driving area where only the second motor generator is operated (at a low-speed vehicle starting, or a reverse vehicle driving, mainly), the driving torque of the second motor generator can be transmitted to the vehicle driving wheel without receiving any resistance of the engine or the first motor generator. Further, in the driving area where the second motor generator is not operated (at a middle-high speed driving, mainly), the driving torque of the engine or the first motor generator can be transmitted to the vehicle driving wheel without receiving any resistance of the second motor generator. Accordingly, the driving efficiency as a whole of the vehicle can be improved.

According to another embodiment of the present invention, the control device further comprises a first temperature detection device operative to detect or determine a temperature of the first motor generator, a second temperature detection device operative to detect or determine a temperature of the second motor generator, and a motor-load distribution device operative to determine each temperature state of the first and second motor generators based on detection signals of the first and second temperature detection devices and to change distribution of load of the motor generators in such a manner that when the temperature of the motor generators that are selected as the driving source is a specified (predetermined or predeterminable) temperature or greater, the load of the motor generator having a higher temperature is reduced, substantially maintaining a total torque. Thereby, since the distribution of load of the motor generators is changed in such a manner that when the temperature of the motor generators selected is the specified (predetermined or predeterminable) temperature or greater, the load of the motor generator having the higher temperature is reduced, substantially maintaining the total torque, the damage of the motor generator, such as the copper wear, can be restrained properly, maintaining the total torque, and the driving efficiency as a whole can be maintained with a lower consumption of electricity. Herein, "the load of the motor generator" means any physical quantity such as an electric power that is to be supplied to the motor generator for producing a driving torque, or a torque or a rotational speed that is necessary for the motor generator to generate the electric power.

According to another embodiment of the present invention, the motor-load distribution device is configured so that the specific temperature is adjustable in accordance with demanded load to the motor generators in such a manner that the specific temperature is adjusted to be lower when the demanded load is greater. There is generally a tendency that the temperature of the motor generator increases when the demanded load is greater. Accordingly, since the specific temperature is adjusted in accordance with the demanded load, the decrease of the driving efficiency due to the increase of the temperature can be restrained effectively.

According to another embodiment of the present invention, there are provided a first rotational speed detection device operative to detect or determine a rotational speed of the first motor generator and a second rotational speed detection device operative to detect or determine a rotational speed of the second motor generator, and the motor-load distribution device is configured to increase the distribution of the load of the motor generator having a higher rotational speed when the temperature of the motor generators that are selected as the driving source is a specified (predetermined or predeterminable) temperature or greater. Thereby, the output can be obtained efficiently by increasing the distribution of the load of the motor generator with less copper wear. That is, the damage of the copper wear may increase when the motor generator has the higher temperature and higher electricity supply, and the efficiency decrease may be primarily influenced by the copper wear damage. Accordingly, the efficiency decrease can be restrained properly by increasing the load distribution of the motor generator having the higher rotational speed.

Further, according to another aspect of the present invention, there is provided a control method of a hybrid vehicle that includes an engine operative to output a driving torque to the vehicle, a first motor generator operative to generate electricity and output a driving torque to the vehicle, the first motor generator being directly coupled to the engine, a second motor generator operative to generate electricity and output a driving torque to the vehicle, a high-efficiency driving operation area of the second motor generator being set on a lower-speed side relative to a high-efficiency driving operation area of the first motor generator, and a battery operative to supply electricity to the first and second motor generators, the battery being charged by the first and second motor generators, the control method comprising a first step of selecting at least one driving source from the engine, the first motor generator, and the second motor generator so as to provide the highest driving efficiency as a whole of the vehicle, and a second step of operate the selected driving source that is selected by the first step. The present control method of a hybrid vehicle can provide substantially the same functions and effects as the above-described control device.

Further, according to another aspect of the present invention, there is provided a computer program product, particularly embodied on a computer-readable storage medium, as a signal or as a data stream, comprising computer-readable instructions which when loaded and executed on a suitable system perform the steps of a control method of a hybrid vehicle according to the invention or a preferred embodiment thereof.

Other features, aspects, and advantages of the present invention will become apparent from the following description which refers to the accompanying drawings.
FIG. **1** is a diagram showing a schematic constitution of a hybrid vehicle according to a first embodiment of the present invention.
FIG. **2** is a block diagram according to the embodiment of FIG. **1****.**
FIG. **3** is an image diagram of a control map based on a demanded torque and a charging amount.
FIG. **4** is a graph of an engine fuel-consumption-efficiency ratio map based on a torque and an engine (rotational) speed.
**FIG. 5** is a graph showing a driving-efficiency operation area of a first motor generator based on a torque and a motor rotational speed.
FIG. **6** is a graph showing a driving-efficiency operation area of a second motor generator based on a torque and a motor rotational speed.
FIG. **7** is a flowchart showing an example of a vehicle driving control of the hybrid vehicle according to the embodiment of the present invention.
FIG. **8** is a flowchart of a driving processing subroutine for an engine-joint operation of FIG. **7****.**
FIG. **9** is a flowchart of a driving processing subroutine for a motor-single operation of FIG. **7****.**
FIG. **10** is a flowchart of a driving processing subroutine for an engine-single operation of FIG. **7****.**
FIG. **11** is a flowchart of a charging processing subroutine of FIG. **7****.**
FIG. **12** is a flowchart of an example of regeneration processing according to the present embodiment.
FIG. **13** is a block diagram according to a second embodiment, which corresponds to FIG. **2** of the first embodiment.
FIG. **14** is a graph of the engine fuel-consumption-efficiency ratio map based on the torque and the engine speed according to the second embodiment.
FIG. **15** is a graph showing the driving-efficiency operation area of the first motor generator based on the torque and the motor rotational speed according to the second embodiment.
FIG. **16** is a graph showing the driving-efficiency operation area of the second motor generator based on the torque and the motor rotational speed according to the second embodiment.
FIG. **17** is a flowchart showing an example of the vehicle driving control of the hybrid vehicle according to the second embodiment of the present invention.
**FIG. 18** is a flowchart showing an example of the vehicle driving control of the hybrid vehicle according to the second embodiment of the present invention.
FIG. **19** is a flowchart of a driving processing subroutine for an engine-joint operation at a low temperature of FIG. **17****.**
FIG. **20** is a flowchart of a driving processing subroutine for a motor-single operation at the low temperature of FIG. **17****.**
FIG. **21** is a flowchart of a driving processing subroutine for an engine-single operation at a low temperature of FIG. **17****.**
FIG. **22** is a flowchart of a driving processing subroutine for the engine-joint operation at a high temperature of FIG. **17****.**
FIG. **23** is a flowchart of a driving processing subroutine for the motor-single operation at the high temperature of FIG. **17****.**
FIG. **24** is a flowchart of a charging processing subroutine of FIG. **17****.**
**FIG. 25** is a flowchart of the charging processing subroutine of FIG. **17****.**
FIG. **26** is a flowchart of the charging processing subroutine of FIG. **17****.**
FIG. **27** is a flowchart of regeneration processing at a deceleration according to the second embodiment.
FIG. **28** is a flowchart of the regeneration processing at the deceleration according to the second embodiment.
FIG. **29** is a flowchart of the regeneration processing at the deceleration according to the second embodiment.

Hereinafter, preferred embodiments of the present invention will be described referring to the accompanying drawings.

### EMBODIMENT 1

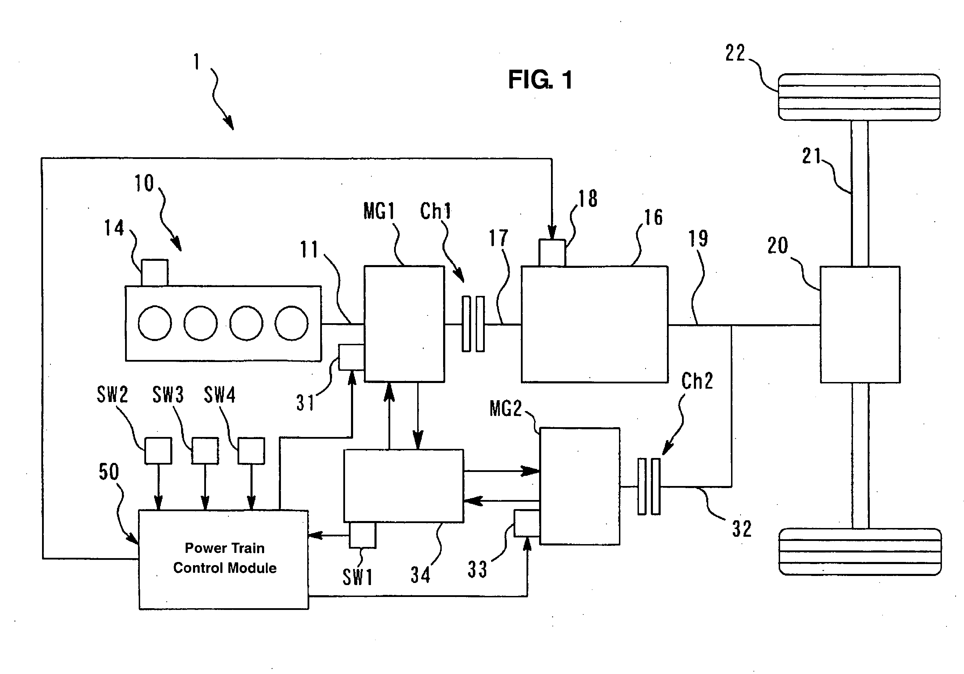

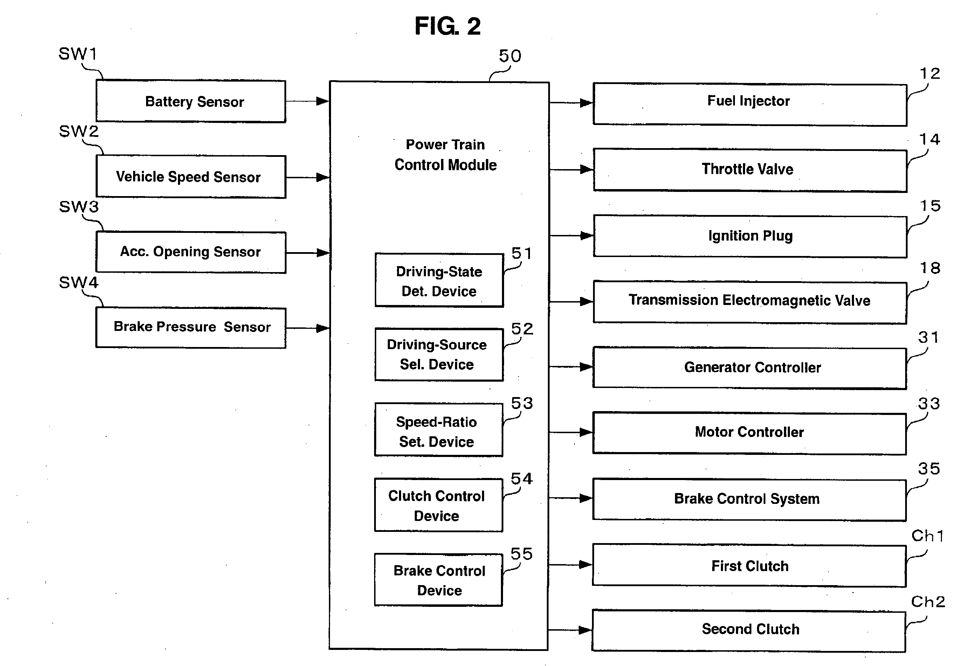

FIG. **1** is a diagram showing a schematic constitution of a hybrid vehicle according to a first preferred embodiment of the present invention. FIG. **2** is a block diagram according to the embodiment of FIG. **1****.**

Referring to FIGS. **1** and **2**, a hybrid vehicle **1** particularly is a -parallel hybrid type of vehicle, which comprises an engine **10** and first and second motor generators **MG1**, **MG2**, as a driving source, and a PCM (Power Train Control Module) **50** to control the driving sources **10**, **MG1**, **MG2**.

The engine **10** comprises a crank shaft **11** and additionally a fuel injector **12**, a throttle valve **14** and an ignition plug as shown in FIG. **2**. The (at least one) crank shaft **11** is coupled to an input shaft **17** of a transmission **16** of the hybrid vehicle **1** via the first motor generator **MG1** and a first clutch **Ch1**. The transmission **16** is configured to change the speed ratio thereof by using a transmission electromagnetic valve **18**. Further, an output shaft **19** of the transmission **16** is coupled to a differential mechanism **20**. Thus, a driving force of the engine **10** is transmitted to a driving wheel **22** via the differential mechanism **20** and a driving shaft **21**.

The first motor generator **MG1** is comprised of an electricity generator that is (particularly directly) coupled to the crank shaft **11**. The first motor generator **MG1** is configured to generate the electricity as the driving source of an engine output from the crank shaft **11** and to output the driving force to the input shaft **17** of the transmission **16** via the first clutch **Ch1**. The first motor generator **MG1** is equipped with a generator controller **31**, which is controlled by a control of the PCM **50** so as to adjust or control the electricity generation amount and/or an output torque.

The second motor generator **MG2** is comprised of an electricity generator that is operative to be the driving source at a vehicle starting or a reverse vehicle driving and/or to conduct an energy regeneration at a vehicle deceleration. A motor output shaft **32** of the second motor generator **MG2** is operationally coupled to the output shaft **19** of the transmission **16** via the second clutch **Ch2**. The second motor generator **MG2** is equipped with a motor controller **33**, which is controlled by the control of the PCM **50** so as to control or adjust the electricity generation amount and/or an output torque.

At least one battery or accumulator **34** is connected to the motor generators **MG1**, **MG2**. The battery **34** supplies an electric power to the motor generators **MG1**, **MG2** and charges or accumulates (or is charged by) the electric power generated by the motor generators **MG1**, **MG2**. Further, the battery 34 is equipped with a battery sensor **SW1** to detect or determine the charging or accumulation amount. The battery sensor **SW1** monitors the electric current and/or voltage of the battery to detect or determine the charging amount.

The hybrid vehicle **1** is equipped with a brake control system **35** (see FIG. **2**) that controls braking of the vehicle at a specified (predetermined or predeterminable) driving state with a frictional brake.

Referring to FIG. **2**, the hybrid vehicle 1 is equipped with one or more of the battery sensor **SW1**, a vehicle speed sensor **SW2**, an accelerator opening sensor **SW3**, a brake pressure sensor **SW4** and so on to detect or determine vehicle driving state. These one or more sensors **SW1** - **SW4** are connected to the PCM **50** as input elements.

Further, to the PCM **50** are connected, as one or more output elements, the fuel injector **12**, throttle valve **14**, ignition plug **15**, transmission electromagnet valve **18**, generator controller **31**, motor controller **33**, first and second clutches **Ch1**, **Ch2**, and/or brake control system **35**.

The PCM **50**, which is or comprises a microprocessor comprising CPU, memories and others, reads one or more detection signals from the one or more input elements, executes specified (predetermined or predeterminable) processing, and outputs one or more control signals to the one or more output elements with function of program modules. In an example illustrated, the PCM **50** performs respective functions as a driving-state determination device **51**, a driving-source selection device **52**, a speed-ratio setting device **53**, a clutch control device **54**, and/or a brake control device **55**.

The driving-state determination device **51** determines a driving state of the hybrid vehicle **1**. This device **51**, for example, determines an existence of demand for charging and/or an allowance of charging particularly based on the detection signal of the battery sensor **SW1**, calculates or determines a demanded torque of an operator particularly based on the detection signals of the vehicle speed sensor **SW2** and/or the accelerator opening sensor **SW3**, and calculates or determines the regenerative braking torque at the vehicle deceleration particularly based on the detection signals of the vehicle speed sensor **SW2** and/or the brake pressure sensor **SW4**.

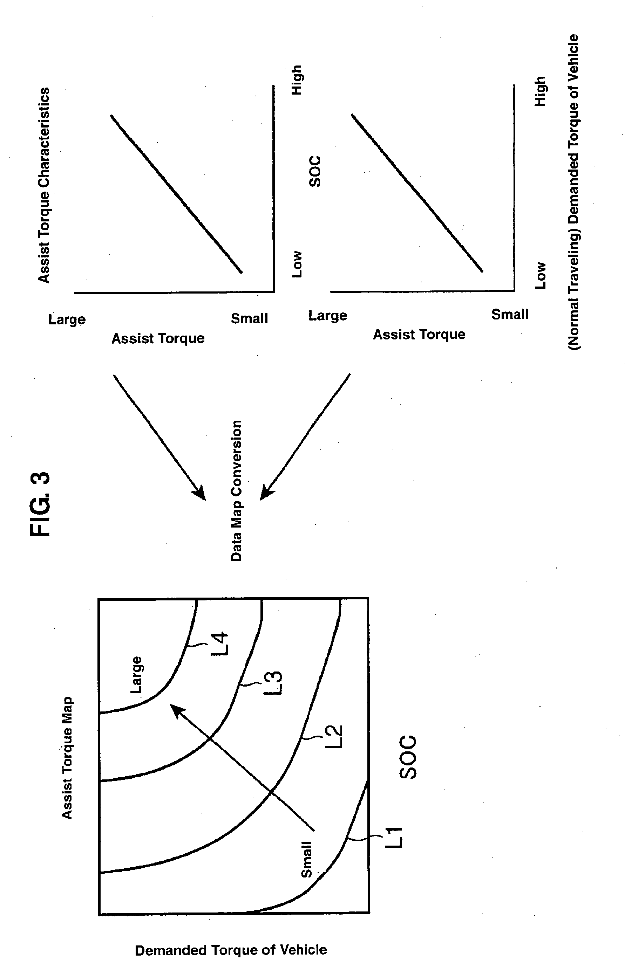

The driving-source selection device **52** selects or specifies the engine **10**, the first motor generators **MG1**, or the second motor generator **MG2** as the driving source based on control maps or relationships or tables **M1** - **M5** that are memorized in the memory previously. Next, the control maps or relationships or tables M1 - M5 will be described referring to FIGS. **3** - **6**.

FIG. **3** is an image diagram of the control map or relationship or table **M1** based on the demanded torque and a charging amount.

Referring to FIG. **3**, a torque that can be outputted by the respective motor generators **MG1**, **MG2** (hereinafter, referred to as "assist torque") is determined by or relates to the charging amount (SOC) of the battery **34**. The assist torque by the motor generators **MG1**, **MG2** at the normal vehicle traveling state particularly is in proportion to the demanded torque of the hybrid vehicle **1** (see a lower right graph of FIG. **3**). Herein, these characteristics are made as data through previous experiments or the like, and a data-map transfer is conducted, thereby an assist torque map or relationship at the left of FIG. **3** that is based on the demanded torque of the vehicle and the above-described SOC can be obtained. Accordingly, in the present embodiment, the combination of the demanded torque and the remaining amount of SOC is set based on plural traveling areas that are split or defined by some contour lines **L1** - **L4** in the graph or relationship and memorized in the memory as the control map or table or relationship **M1**. Thereby, the driving-source **selection** device **52** can select the proper driving source (mainly, determine necessity of the engine operation).

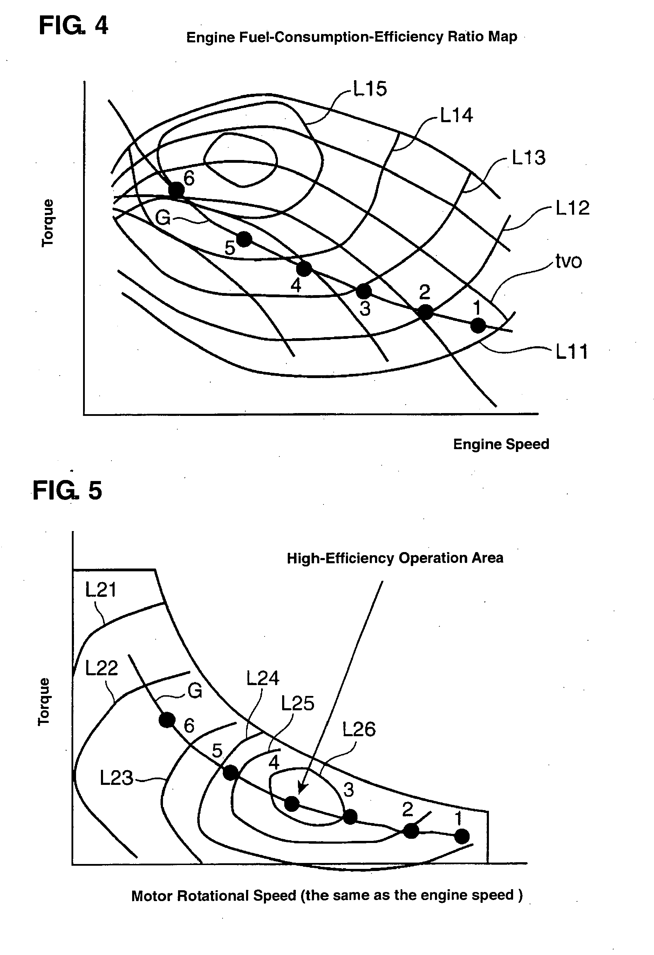

Further, the control maps or tables or relationships **M2** - **M4** shown in FIGS. **4** and **5** are provided for selection of the motor generators **MG1**, **MG2** according to the present embodiment.

FIG. **4** is a graph of an ;engine fuel-consumption-efficiency ratio map or table or relationship based on the torque and the engine (rotational) speed. In the graph, plural areas based on the torque and the engine speed as the fuel-consumption-efficiency ratio of the engine **10** are set or defined by plural contour lines **L11** - **L15**. According to the present embodiment, the combination of the torque and the engine speed is memorized in the memory as the control map **M2** based on this graph, and the comparison with the data or content of the control map **M2** enables the driving-source selection device **52** to determine the necessity of the engine operation. Herein, since the fuel-consumption-efficiency ratio differs depending on the speed ratio of the transmission **16** even at the same torque and engine speed, a speed ratio graph **G** (figures in the graph indicate the speed ratio) is set in the control map **M2** as shown in FIG. **4** so as to specify the fuel-consumption-efficiency ratio for each speed ratio.

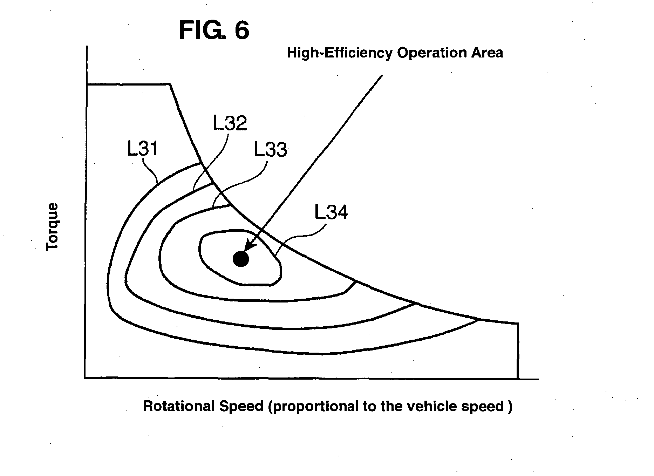

Next, the high-efficiency operation area of the first and second motor generators **MG1**, **MG2** will be described. Herein, "high-efficiency operation area" particularly means a driving area where the efficiency is the highest in the characteristics map or table or relationship based on the torque and the engine speed. This high-efficiency operation area is selected as the highest-efficiency area in the graph shown in FIGS. **5** and **6**.

FIG. **5** is a graph showing the driving-efficiency operation area of the first motor generator based on the torque and the motor rotational speed.

Referring to FIG. **5**, in this graph, plural areas based on the torque and the motor speed as the driving efficiency ratio of the first motor generator **MG1** are set or defined by plural contour lines **L21** - **L26**. According to the present embodiment, the combination of the torque and the motor speed is memorized in the memory as the control map or table or relationship **M3** based on or corresponding to this graph, and the comparison with the data of the control map **M4**, which will be described below, enables determination of the necessity of operation of each of the first and second motor generators **MG1**, **MG2**. Herein, the first motor generator **MG1** is directly coupled to the crank shaft **11**, so the high-efficiency operation area (inside the contour line **L26**) is set in the intermediate- or middle-speed and low-load area. Also, since the first motor generator **MG1** is directly coupled to the crank shaft **11**, the driving efficiency of the first motor generator **MG1** differs depending on the speed ratio of the transmission **16** even at the same torque and motor rotational speed. Therefore, a speed ratio graph **G** (figures in the graph indicate the speed ratio) is set in the control map **M3** as shown in FIG. **5** so as to specify the driving efficiency of the first motor generator **MG1** for each speed ratio.

FIG. **6** is a graph or relationship showing the driving-efficiency operation area of the second motor generator based on the torque and the motor rotational speed.

Referring to FIG. **6**, in this graph, plural areas based on the torque and the motor speed as the driving efficiency ratio of the second motor generator **MG2** are set or defined by plural contour lines **L31** - **L34**. According to the present embodiment, the combination of the torque and the motor speed is memorized in the memory as the control map or table or relationship M4 based on this graph, and the comparison with the data of the control map **M3** shown in FIG. **5** enables determination of the necessity of operation of each of the first and second motor generators **MG1**, **MG2**. Herein, the second motor generator **MG2** is operated mainly at the vehicle starting, the reverse vehicle driving, or the light-load driving area, so the high-efficiency operation area (inside the contour line **L34**) is set at the low-speed and middle-load area.

Herein, in a case where the first and second motor generator **MG1**, **MG2** are used for the energy regeneration, the control map or table or relationship **M5** for controlling the charge capacity is memorized in the memory of the PCM **50**. This control map **M5** is made basically in the same manner as the control map **M1** shown in FIG. **3**, so detailed descriptions are omitted here.

The speed-ratio setting device **53** is configured to select, particularly based on the control maps **M2**, **M3**, either one of the speed ratio that is determined by the fuel-consumption-efficiency ratio of the engine **10** and the speed ratio that is determined by the efficiency operation area of the first motor generator **MG1** in accordance with the driving state. As shown in FIGS. **4** and **5**, the speed ratio graph **G** is set in the control maps **M2**, **M3** so as to specify the fuel-consumption-efficiency ratio of the engine **10** and the driving efficiency of the first motor generator **MG1** particularly for each speed ratio. Herein, according to the present embodiment, the speed-ratio setting device **53** is configured so that the speed ratio to provide the highest fuel-consumption-efficiency ratio (fuel economy) of the engine **10** is selected with priority in a case where the engine **10** and the first motor generator **MG1** are used at the same time as the driving source as shown in the flowcharts described below. As a result, in the driving area where the engine **10** and the first motor generator **MG1** are used at the same time as the driving source, the hybrid vehicle **1** is operated in the state where the fuel-consumption-efficiency ratio (fuel economy) becomes the highest.

The clutch control device **54** connects the first clutch **Ch1** when the engine **10** or the first motor generator **MG1** are operated and disconnects the first clutch **Ch1** when any one of the engine **10** and the first motor generator **MG1** are not operated as shown in the flowchart described below. Further, the clutch control device **54** connects the second clutch **Ch2** when the second motor generator **MG2** is operated and disconnects the second clutch **Ch2** when the second motor generator **MG2** is not operated.

The above-described driving-state determination device **51**, driving-source selection device **52**, speed-ratio setting device **53**, and clutch control device **54** provide the following controls of the hybrid vehicle **1** as shown in Chart **1**.

**Chart 1**

| Driving Source | Driving State | | | | |
|---|---|---|---|---|---|
| | Vehicle Starting, Low Load, Reverse Driving | Engine Operation | | Engine Regeneration | |
| | | Low Speed | Middle Speed | Low Speed | Middle Speed |
| Engine | Not operated | Operated | Operated | Not operated | Not operated |
| First Motor Generator | Not operated | Operated | Operated | Not operated | Operated |
| Second Motor Generator | Operated | Operated | Not operated | Operated | Not operated |
| First Clutch | Disconnected | Connected | Connected | Disconnected | Connected |
| Second Clutch | Connected | Connected | Disconnected | Connected | Disconnected |

The brake control device **55** controls the brake control system **35** particularly based on results of the determination of the detection signal of the brake pressure sensor **SW4** by the driving-state determination device **51**.

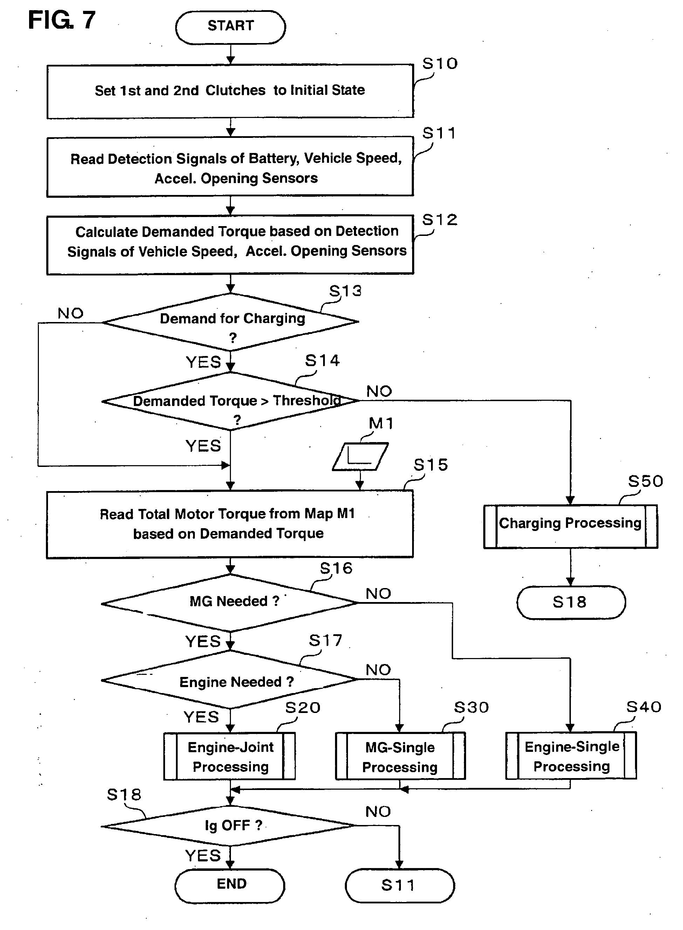

Next, an exemplified driving control of the hybrid vehicle according to the present embodiment will be described referring to FIGS. **7-12****.**

FIG. **7** is a flowchart showing the exemplified driving control of the hybrid vehicle according to the embodiment of the present invention.

Referring to FIG. **7**, this flowchart is executed by the PCM **50** when the ignition switch of the hybrid vehicle **1** is turned on.

When the ignition switch is turned on, the clutch control device **54** of the PCM **50** sets the first and second clutch **Ch1, Ch2** to an initial state (step **S10).** In this initial state, for example, the first clutch is disconnected and the second clutch **Ch2** is connected, thereby the torque transmission path is controlled so that the driving force of the second motor generator **MG2** can be transmitted to the driving wheel **22** solely. In this state, the driving-state determination device **51** of the PCM **50** reads the detection signals of the battery sensor **SW1,** vehicle speed sensor **SW2** and/or accelerator opening sensor **SW3** (step **S11**), and calculates or determines the demanded torque of the hybrid vehicle **1** based on the detection signals of the vehicle speed sensor **SW2** and/or accelerator opening sensor **SW3** (step **S12**).

Next, the PCM **50** determines the existence of demand for charging based on the detection signal of the battery sensor **SW1** read in the step **S11** (step **S13**). When it is determined that there exists the demand for charging, the PCM **50** determines whether the demanded torque exceeds a specified (predetermined or predeterminable) threshold or not (step **S14**). This determination is provided to limit the execution of the charging processing only to the case where the demanded torque does not exceed the specified (predetermined or predeterminable) threshold because the first and second motor generators **MG1**, **MG2** need to be operated as the driving source in the case where the demanded torque is rather greater over the specified (predetermined or predeterminable) threshold. When the demanded torque is less than the specified (predetermined or predeterminable) threshold in the step **S14,** the charging subroutine (step **S50**), which will be described, is executed, and the control proceeds to step **S18.**

Meanwhile, when it is determined that the demand for charging does not exist in the step **S13** or it is determined that the demanded torque exceeds the specified (predetermined or predeterminable) threshold in the step **S14,** the control proceeds to the flow in which the respective motor generators **MG1**, **MG2** are operated as the driving source. In this case, the PCM **50** reads the total motor torque from the control map **M1** based on the demanded torque of the hybrid vehicle **1** and the charging amount (step **S15**).

Next, the PCM **50** determines whether the first and second motor generators **MG1**, **MG2** need to be operated or not (step **S16**). This determination is executed particularly by comparing the charging amount read from the control map **M1** of the graph of FIG. **3** with the charging amount based on the detection signal of the battery sensor **SW1.**

When it is determined that the first and second motor generators **MG1**, **MG2** need to be operated, the PCM **50** further determines whether or not the current driving state is a state where the engine **10** needs to output the driving force (step **S17**). As shown in Chart **1**, at the vehicle starting, the reverse vehicle driving, and/or the light-load driving area, the engine **10** is not operated and the hybrid vehicle **1** is driven by the second motor generator **MG2** solely. Thus, the operation of the engine **10** is executed at a specified (predetermined or predeterminable) rotational speed area where the combustion efficiency is properly high and a properly low emission is expected.

When the current driving state is the state where the engine **10** needs to output the driving force, the driving processing subroutine for the engine-joint operation (step **S20**) is executed. Meanwhile, when the current driving state is not the state where the engine **10** needs to output the driving force, the driving processing subroutine for the motor-single operation (step S30) is executed. Further, when it is determined that the current driving state is the state where any one of the first and second motor generators **MG1**, **MG2** needs not to output the driving force in the step **S16**, the driving processing subroutine for the engine-single operation (step **S40**) is executed.

After the execution of the subroutines **S20**, **S30**, **S40**, the PCM **50** determines whether the ignition switch is turned OFF or not (step **S18**). When this OFF is determined, the control ends. When the ignition switch is not turned OFF, the control proceeds to the step **S11,** and the above-described processing is repeated.

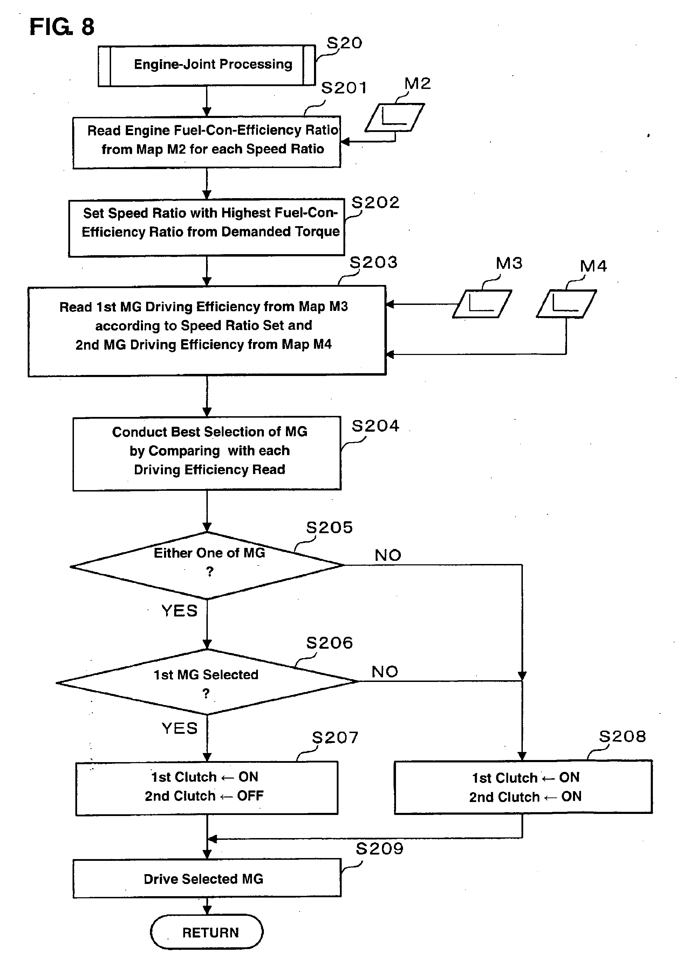

FIG. **8** is a flowchart of the driving processing subroutine for the engine-joint operation. (step **S20**) of FIG. **7**.

Referring to FIG. **8****,** in the driving processing subroutine for the engine-joint operation, the PCM **50** reads the fuel-consumption-efficiency ratio of the engine **10** from the control map **M2** of the graph of FIG. **4** for each speed ratio (step **S201**). Then, the speed-ratio setting device **53** of the PCM **50** sets the speed ratio having the highest fuel-consumption-efficiency ratio based on the demanded torque calculated or determined in the step **S12** in the main routine (step **S202**). Thereby, the transmission electromagnetic valve **18** is driven, so the speed ratio of the transmission **16** is properly changed according to the control executed in the step **S202**.

Next, the PCM **50** reads the driving efficiency of the first motor generator **MG1** according to the speed ratio set or determined in the step **S202** based on the control map **M3** of the graph of FIG. **5** and also reads the driving efficiency of the second motor generator **MG2** from the control map **M4** of the graph of FIG. **6** (step **S203**). The PCM **50** conducts the selection of one or both the motor generators **MG1**, **MG2** by comparing with each driving efficiency read in the step **S203** (step **S204**).

Herein, the PCM **50** calculates the best combined driving efficiency based on the speed ratio set and then selects the motor generator. The "combined driving efficiency" means the driving efficiency that is obtained by distributing the driving efficiency of the first motor generator **MG1** corresponding to the selected speed ratio and the driving efficiency of the second motor generator **MG2** corresponding to the selected speed according to a specified (predetermined or predeterminable) calculation equation in an optimization method, such as a simplex method. Thus, either one or both of the first and second motor generators **MG1**, **MG2** are selected particularly based on the driving state or the charging amount.

Next, the control of the first and second clutches **Ch1**, **Ch2** are executed based on the selection manner of the first and second motor generators **MG1**, **MG2**.

Specifically, the PCM **50** determines whether either one or both of the motor generators is selected or not (step **S205**). When either one or both of the first and second motor generators **MG1**, **MG2** is selected, further determination as to whether the selected one is the first motor generator **MG1** or not is conducted (step **S206**). When that is the first motor generator **MG1**, the clutch control device **54** of the PCM **50** connects the first clutch **Ch1** and disconnects the second clutch **Ch2** (step S207).

Meanwhile, when both the first and second motor generators **MG1**, **MG2** are selected in the step **S205**, or when only the second motor generator **MG2** is selected, the clutch control device **54** of the PCM **50** connects both the first and second clutches **Ch1**, **Ch2** (step **S208**). In other words, the clutch control device **54** of the PCM **50** controls the first and second clutches **Ch1**, **Ch2** according to the preceding selection of either one or both of the first and second motor generators **MG1**, **MG2**.

Then, the selected motor generator is driven (step **S209**), and the control returns to the main routine.

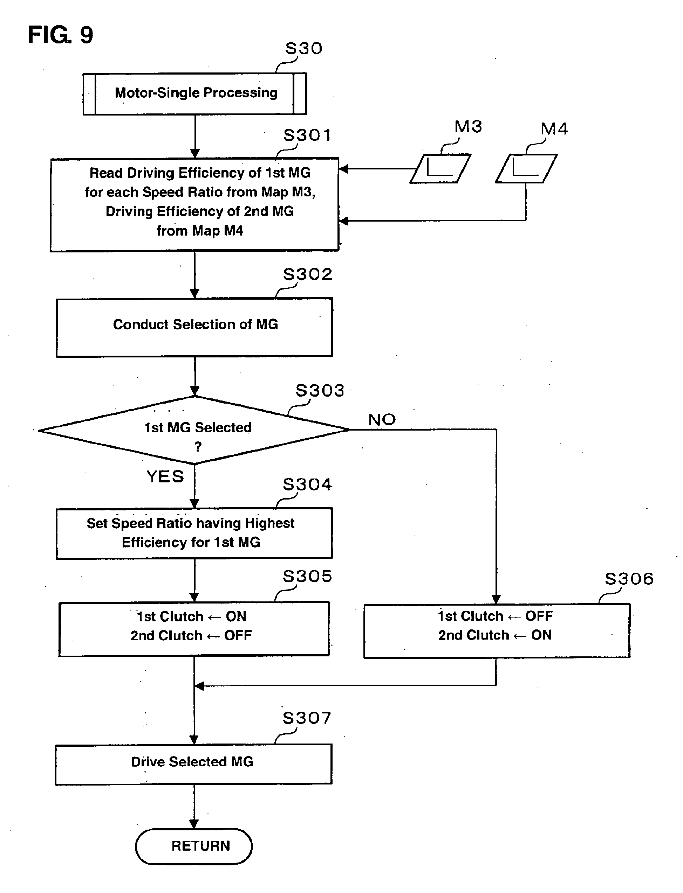

FIG. **9** is a flowchart of the driving processing subroutine for the motor-single operation (step **S30**) of FIG. **7**.

Referring to FIG. **9**, in the driving processing subroutine for the motor-single operation, the PCM **50** reads or determines the driving efficiency of the first motor generator **MG1** particularly according to each speed ratio from the control map **M3** of the graph of FIG. **5**, and reads or determines the driving efficiency of the second motor generator **MG2** particularly from the control map **M4** of the graph of FIG. **6** (step **S301**). The PCM **50** compares each driving efficiency read in the step **S301** and thereby conducts the selection of the motor generators **MG1**, **MG2** (step **S302**).

Then, it is determined whether the selected one is the first motor generator **MG1** or not (step **S303**). When that is the first motor generator **MG1**, the speed-ratio setting device **53** of the PCM **50** sets the speed ratio having the highest driving efficiency for the first motor generator **MG1** based on the demanded torque calculated or determined in the step **S12** in the main routine (step **S304**). Thereby, the transmission electromagnetic valve **18** is driven or controlled, so the speed ratio of the transmission **16** is properly changed according to the control executed in the step **S302**. Then, the clutch control device **54** of the PCM **50** connects the first clutch **Ch1** and disconnects the second clutch **Ch2** (step **S305**).

Meanwhile, when the answer of the determination of the step **S303** is NO, that is, when the second motor generator **MG2** is selected, the clutch control device **54** of the PCM **50** disconnects the first clutch **Ch1** and connects the second clutch **Ch2** (step **S306**).

After the steps **S305**, **S306**, the selected motor generator is driven (step **S307**), and the control returns to the main routine.

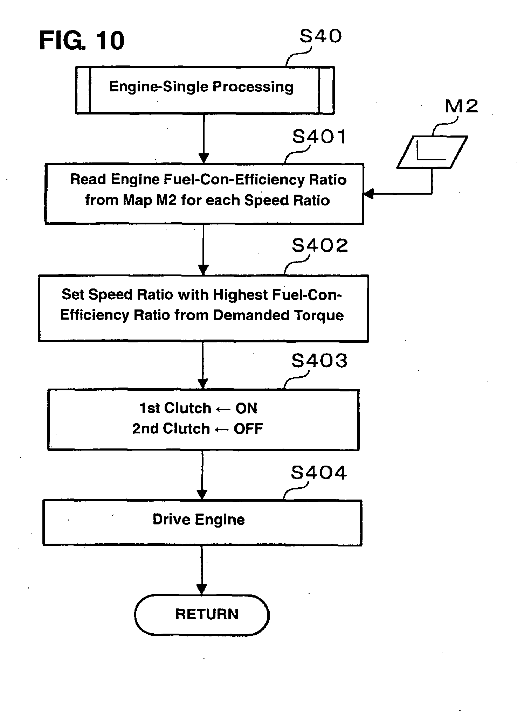

FIG. **10** is a flowchart of the driving processing subroutine for the engine-single operation (step **S40**) of FIG. **7**.

Referring to FIG. **10**, in the driving processing subroutine for the engine-single operation, the PCM **50** reads or determines the fuel-consumption-efficiency ratio of the engine **10** for each speed ratio particularly from the control map **M2** of the graph of FIG. **4** (step **S401**). Then, the speed-ratio setting device **53** of the PCM **50** sets or controls the speed ratio having the highest fuel-consumption-efficiency ratio based on the demanded torque calculated or determined in the step **S12** in the main routine (step **S402**). Thereby, the transmission electromagnetic valve **18** is driven, so the speed ratio of the transmission **16** is properly changed or controlled according to the control executed in the step **S402**.

Next, the clutch control device **54** of the PCM **50** connects the first clutch **Ch1** and disconnects the second clutch **Ch2** (step **S403**).

After this, the engine **10** is operated (step S404), and the control returns to the main routine.

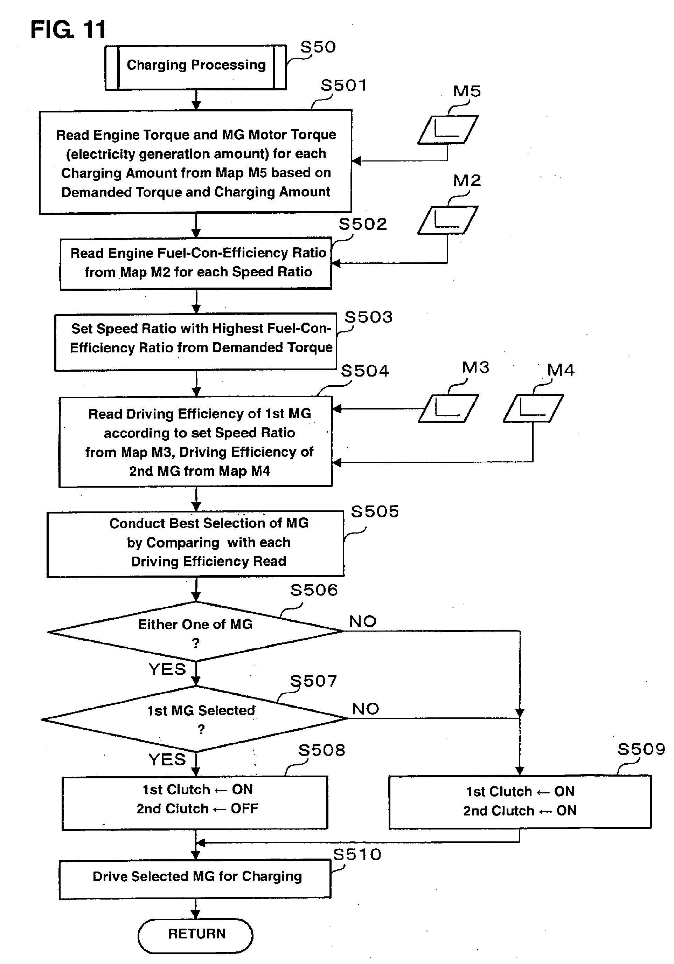

FIG. **11** is a flowchart of the charging processing subroutine (step **S50)** of FIG. **7**.

Referring to FIG. **11**, in the charging processing subroutine, the PCM **50** reads the engine torque and the motor torque (electricity generation amount) for each charging amount from the charging control map **M5** related to the graph of FIG. **3**, based on the demanded torque and the charging amount that are results of the steps **S11, S12** of the main routine (step **S501**).

Then, the PCM **50** reads the fuel-consumption-efficiency ratio of the engine **10** for each speed ratio from the control map **M2** (step **S502**). Next, the speed-ratio setting device **53** of the PCM **50** sets or controls the speed ratio having the highest fuel-consumption-efficiency ratio (step **S503**). Thereby, the transmission electromagnetic valve **18** is driven or controled, so the speed ratio of the transmission **16** is properly changed according to the control executed in the step **S503.**

Next, the PCM **50** reads the driving efficiency of the first motor generator **MG1** according to each speed ratio set in the step **S503**, and reads or determines the driving efficiency of the second motor generator **MG2** particularly from the control map **M4** (step **S504**). The PCM **50** compares each driving efficiency read in the step **S504** and thereby conducts the selection of the motor generators **MG1**, **MG2** (step **S505**). Herein, the PCM **50** calculates the best combination efficiency based on the set speed ratio, and selects the motor generator. Thus, either one or both of the first and second motor generators **MG1**, **MG2** are selected based on the driving state or the charging amount.

Next, the control of the first and second clutches **Ch1, Ch2** is executed based on the selection manner of the first and second motor generators **MG1**, **MG2**.

First, the PCM **50** determines whether either one of the motor generators is selected or not (step **S506**). When either one of the first and second motor generators **MG1**, **MG2** is selected, further determination as to whether the selected one is the first motor generator **MG1** or not is conducted (step **S507**). When that is the first motor generator **MG1**, the clutch control device **54** of the PCM **50** connects the first clutch **Ch1** and disconnects the second clutch **Ch2** (step **S508**).

Meanwhile, when both the first and second motor generators MG1, **MG2** are selected in the step **S505,** or when only the second motor generator **MG2** is selected, the clutch control device **54** of the PCM **50** connects both the first and second clutches **Ch1, Ch2** (step **S509**).

Then, the selected motor generator is operated as the driving source for the charging (step **S510**), and the control returns to the main routine.

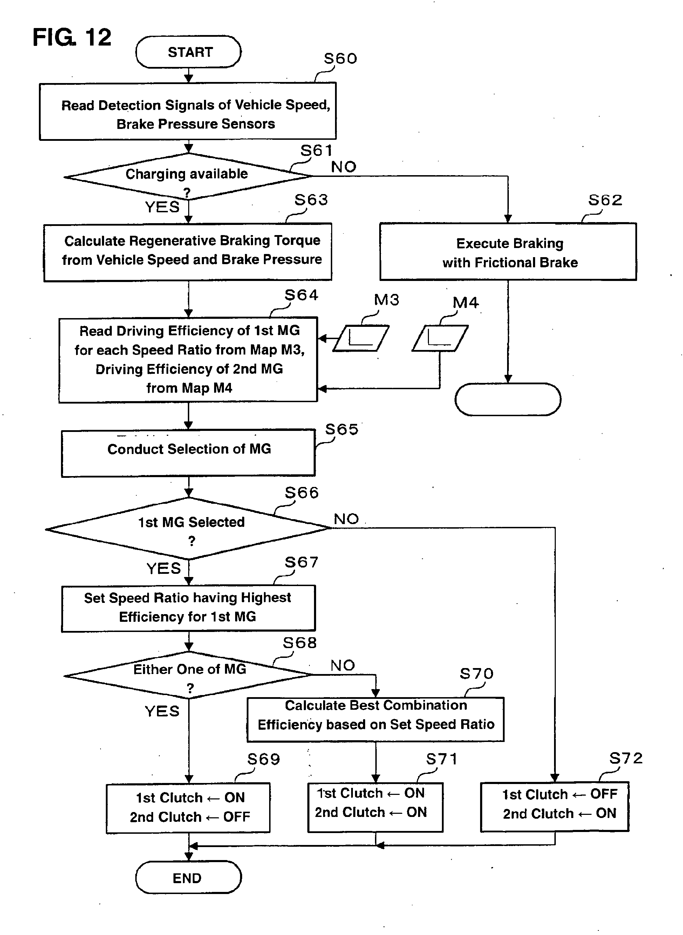

FIG. **12** is a flowchart of an example of regeneration processing according to the present embodiment.

Referring to FIG. **12**, the present embodiment is configured so that when the vehicle deceleration of the hybrid vehicle **1** is demanded, the regeneration processing of braking and charging of the vehicle by using the first and second motor generators **MG1**, **MG2** is executed under a specified (predetermined or predeterminable) driving state.

The PCM **50**, in the regeneration processing, first reads the detection signals of the vehicle speed sensor **SW2** and/or the brake pressure sensor **SW4** (step **S60**) and determines availability of the regeneration processing.

Next, availability of charging is determined based on the detection signal of the battery sensor **SW1** in order not to be overcharging the battery (step **S61**). When the charging is not available, the brake control device **55** controls the brake control system **35** to execute the braking control with a frictional brake (step **S62**). Then, the control ends.

When the charging is available, the PCM **50** calculates a regenerative braking torque based on the vehicle speed and the brake pressure read in the step **S60** (step **S63**). Then, the PCM **50** reads the driving efficiency of the first motor generator **MG1** according to each speed ratio from the control map M3, and reads the driving efficiency of the second motor generator **MG2** from the control map **M4** (step **S64**). The PCM **50** compares each driving efficiency read in the step **S64** and thereby conducts the selection of the motor generators **MG1**, **MG2** (step **S65**).

Then, the control of the first and second clutches **Ch1, Ch2** is conducted by the selection manner of the motor generators **MG1**, **MG2**.

In the regeneration processing, it is determined by the PCM **50** whether the selected one is the first motor generator **MG1** or not (step **S66**). When that is the first motor generator **MG1**, the PCM **50** sets the speed ratio having the highest driving efficiency for the first motor generator MG1 (step **S67**). Thereby, the transmission electromagnetic valve **18** is driven, so the speed ratio of the transmission **16** is properly changed according to the control executed in the step **S67.**

Next, the PCM **50** determines whether only the first motor generator **MG1** is selected or not (step **S68**).

When only the first motor generator **MG1** is selected, the clutch control device **54** of the PCM **50** connects the first clutch **Ch1** and disconnects the second clutch **Ch2** (step **S69**). After this, the battery **34** is charged by the first motor generator MG1 particularly with the braking of vehicle and/or the engine **10**.

Meanwhile, when the second motor generator **MG2** is also selected in the step **S68**, the PCM **50** calculates the best combination efficiency based on the set speed ratio of the first motor generator (step **S70**). Then, the clutch control device **54** of the PCM **50** connects both the first and second clutches **Ch1, Ch2** (step **S71).** Thereby, the battery **34** is charged by both the motor generators **MG1, MG2.** '

Further, when the selected motor generator in the step **S66** is only the second motor generator **MG2**, the clutch control device **54** of the PCM **50** disconnects the first clutch **Ch1** and disconnects the second clutch **Ch2** (step **S72**). Thereby, the battery **34** is charged by the second motor generator **MG2** particularly with the braking of the vehicle and/or engine **10**.

According to the above-described present embodiment, since the first and second motor generators **MG1**, **MG2** having different high-efficiency driving operation areas are applied and any of the driving sources of the engine **10** and the respective motor generators **MG1**, **MG2** are selected by the driving-source selection device **52** so as to provide the highest driving efficiency as a whole of the hybrid vehicle **1**, the appropriate selection of the driving source can be provided in accordance with the vehicle driving states, thereby improving the driving efficiency as a whole of the hybrid vehicle **1**. Herein, in the first motor generator **MG1** directly coupled to the engine **10** particularly for the engine cranking, its rotational speed may be generally influenced (restricted) by the rotational speed of the engine shaft during the electricity generation and/or torque assist. Since the rotational speed of the engine shaft does not lower below an idling speed while the engine operates, the first motor generator **MG1** operates at a relatively higher-speed driving area relative to the second motor generator **MG2**. According to the present embodiment, since the first and second motor generators **MG1**, **MG2** are further configured so that the high-efficiency driving operation area of the first motor generator **MG1** is set on the higher-speed side relative to the high-efficiency driving operation area of the second motor generator **MG2**, the driving efficiency as a whole of the vehicle can be improved further properly, so that the properly efficient electricity generation and/or torque assist can be provided.

Also, according to the present embodiment, the engine **10** and the first motor generator **MG1** are coupled to the differential mechanism **20** of the hybrid vehicle **1** via the transmission **16**, and the driving-source selection device **52** is configured so as to determine the driving efficiency of the first motor generator **MG1** and compare that with the driving efficiency of the second motor generator **MG2** particularly for each speed ratio of the transmission **16**. Thereby, the first motor generator **MG1** can be used as the driving source for the middle-high speed in which the driving efficiency increases in proportion to the rotational speed of the engine **10**, and comparison with the driving efficiency of the second motor generator **MG2** can be conducted by determining the high-efficiency operation area that is changeable for each speed ratio. Accordingly, the more accurate appropriate distribution can be attained.

Further, according to the present embodiment, the control device further comprises the speed-ratio setting device **53** operative to set the speed ratio of the transmission **16** at the specified (predetermined or predeterminable) speed ratio that enables the first motor generator **MG1** to provide the highest driving efficiency when the driving-source selection device **52** selects the first motor generator **MG1** as the driving source without the operation of the engine **10**. Thereby, since the speed ratio particularly is set so as to provide the highest driving efficiency of the first motor generator **MG1** when the engine **10** is not operated, the driving efficiency as a whole of the hybrid vehicle **1** can be further improved.

Also, according to the present embodiment, the speed-ratio setting device **53** is configured to set the speed ratio of the transmission **16** at the specified (predetermined or predeterminable) speed ratio that enables the fuel-consumption efficiency of the engine **10** to provide the highest efficiency when the driving-source selection device **52** selects the engine **10** and the first motor generator **MG1** as the driving source. Thereby, the fuel-consumption efficiency of the engine **10** particularly has priority in the driving area where the engine operation is needed. Herein, the meaning of "when the driving-source selection device selects **52** the engine **10** and the first motor generator **MG1** as the driving source" includes a case where the engine 10 and both of the first and second motor generators MG1, **MG2** are selected by the driving-source selection device **52** as the execution of the driving processing subroutine for the engine-joint operation shown in FIG. **8**.

Further, according to the present embodiment, the motor output shaft **32** of the second motor generator **MG2** is coupled to the output shaft **19** of the transmission **16**, the first clutch **Ch1** is provided between the first motor generator **MG1** and the transmission **16**, the second clutch **Ch2** is provided at the motor output shaft **32** of the second motor generator **MG2**, and there is provided the clutch control device **54** operative to control the first and second clutches **Ch1**, **Ch2** so as to disconnect the first clutch **Ch1** when the driving-source selection device **52** selects only the second motor generator **MG2** as the driving source (without the operation of the engine **10**) and to disconnect the second clutch **Ch2** when the driving-source selection device **52** excludes the second motor generator **GM2** from the driving source. Thereby, in the driving area where only the second motor generator **MG2** is operated (e.g. at the low-speed vehicle starting, and/or the reverse vehicle driving, mainly), the driving torque of the second motor generator **MG2** can be transmitted to the vehicle driving shaft **21** without receiving any resistance of the engine **10** or the first motor generator **MG1**. Further, in the driving area or condition where the second motor generator **MG2** is not operated (particularly at the intermediate/middle-high speed driving, mainly), the driving torque of the engine **10** or the first motor generator **MG1** can be transmitted to the vehicle driving shaft wheel **21** without receiving any resistance of the second motor generator **MG2**. Accordingly, the driving efficiency as a whole of the hybrid vehicle **10** can be improved.

### EMBODIMENT 2 ..

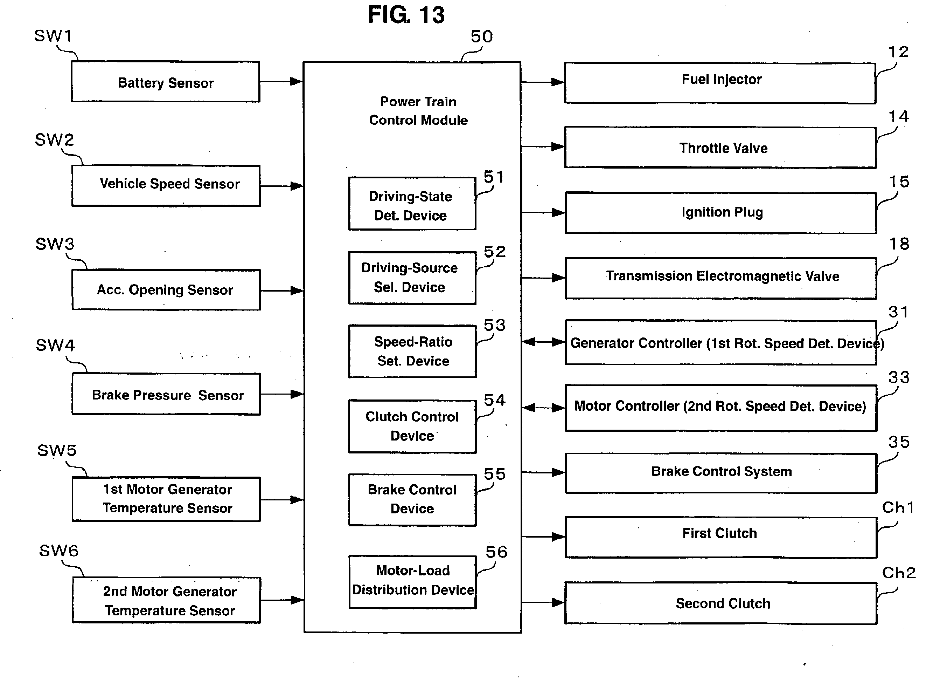

Hereinafter, a second preferred embodiment will be described referring to FIGS. **13** through **29****.** The similar or same components as those of the first embodiment are denoted by the same reference characters, detailed descriptions of which are omitted here.

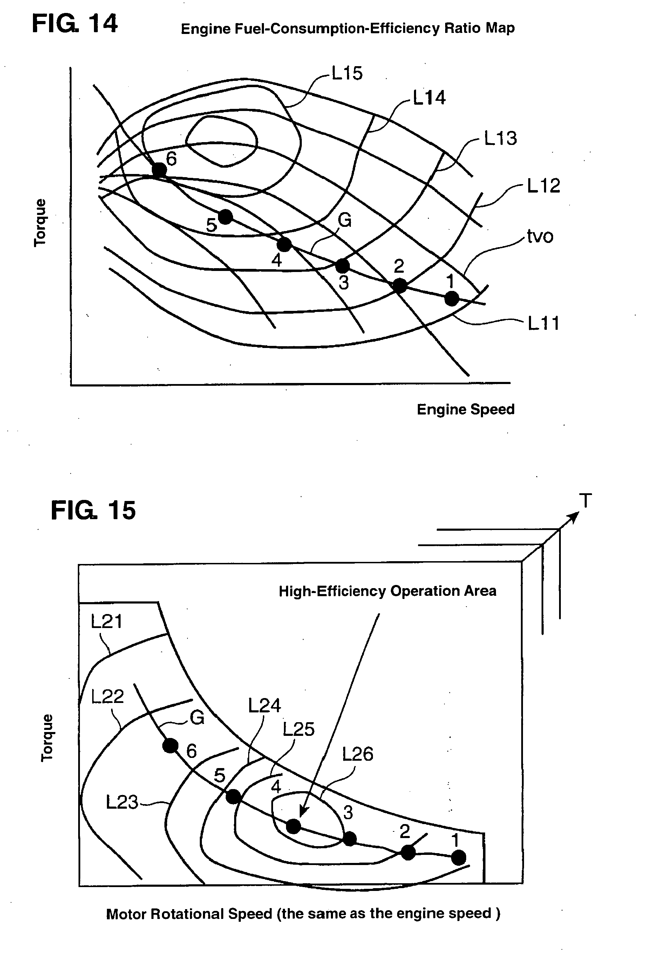

According to the second embodiment, a control map or table or relationship **M10** and a control map or table or relationship **M11** based on graphs of FIGS. **14** and **15** are provided for the section of the motor generators **MG1**, **MG2**.

FIG. **14** is a graph of the engine fuel-consumption-efficiency ratio map or relationship based on the torque and the engine speed, which is similar or substantially the same as FIG. **4** in the first embodiment.

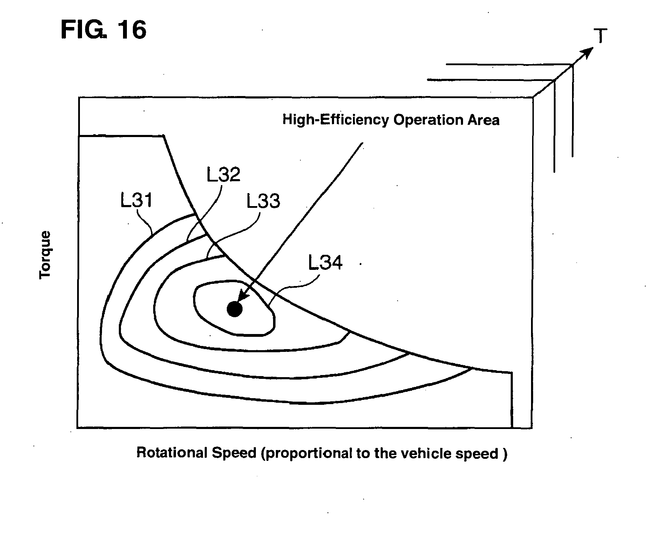

Next, the high-efficiency operation area of the first and second motor generators **MG1**, **MG2** will be described. Herein, "high-efficiency operation area" means a driving area where the efficiency substantially is the highest in the characteristics map based on the torque and the engine speed. This high-efficiency operation area is selected as the highest-efficiency area in the graph shown in FIGS. **15** and **16**.

FIG. **15** is a graph showing the driving-efficiency operation area or condition of the first motor generator based on the torque and the motor rotational speed according to the second embodiment.

Referring to FIG. **15**, in this graph, plural areas or regions or conditions based on the torque and the motor speed as the driving efficiency ratio of the first motor generator **MG1** are set by plural contour lines **L21** - **L26.** According to the second embodiment, the combination of the torque and the motor speed is memorized in the memory as the control map M11 based on this graph, and the comparison with the data of a control map **M12**, which will be described below, enables determination of the necessity of operation of each of the first and second motor generators **MG1**, **MG2**. Herein, the first motor generator **MG1** is (particularly directly) coupled to the crank shaft **11**, so the high-efficiency operation area (inside the contour line **L26**) is set in the intermediate- or middle-speed and low-load area. Also, since the first motor generator **MG1** is (particularly directly) coupled to the crank shaft **11**, the driving efficiency of the first motor generator **MG1** differs depending on the speed ratio of the transmission **16** even at the substantially same torque and motor rotational speed. Therefore, a speed ratio graph **G** (figures in the graph indicate the speed ratio) is set in or determined by the control map or relationship or table **M11** as shown in FIG. **15** so as to specify the driving efficiency of the first motor generator **MG1** for each speed ratio.

FIG. **16** is a graph showing the driving-efficiency operation area of the second motor generator based on the torque and the motor rotational speed according to the second embodiment.

Referring to FIG. **16**, in this graph, plural areas based on the torque and the motor speed as the driving efficiency ratio of the second motor generator **MG2** are set by plural contour lines **L31** - **L34**. According to the present embodiment, the combination of the torque and the motor speed is memorized in the memory as the control map or table or relationship **M12** based on this graph, and the comparison with the data of the control map **M11** shown in FIG. **15** enables determination of the necessity of operation of each of the first and/or second motor generators **MG1**, **MG2**. Herein, the second motor generator **MG2** is operated mainly at the vehicle starting, the reverse vehicle driving, and/or the light-load driving area, so the high-efficiency operation area (inside the contour line **L34**) is set at the low-speed and intermediate- or middle-load area.

Herein, the control maps **M11**, **M12** of the second embodiment are comprised of a multi-dimension map or table or relationship or matrix particularly including a temperature axis **T** so that the torque determined based on the rotational speed is changeable for each temperature at the vehicle driving in light of changing of the driving efficiency of the motor generators **MG1**, **MG2** according to the temperature.

The speed-ratio setting device **53** is configured to select or determine, based on the control maps **M10**, **M11**, either one of the speed ratio that is determined by the fuel-consumption-efficiency ratio of the engine **10** and the speed ratio that is determined by the efficiency operation area of the first motor generator **MG1** in accordance with the driving state. As shown in FIGS. **14** and **15**, the speed ratio graph **G** is set in the control maps **M10**, **M11** so as to specify the fuel-consumption-efficiency ratio of the engine **10** and the driving efficiency of the first motor generator **MG1** for each speed ratio. Herein, according to the second embodiment, the speed-ratio setting device **53** is configured so that the speed ratio to provide the highest fuel-consumption-efficiency ratio (fuel economy) of the engine **10** is selected with priority in a case where the engine **10** and the first motor generator **MG1** are used particularly at the same time as the driving source as shown in the flowcharts described below. As a result, in the driving area where the engine **10** and the first motor generator **MG1** are used particularly at the same time as the driving source, the hybrid vehicle **1** is operated in the state where the fuel-consumption-efficiency ratio (fuel economy) becomes the highest.

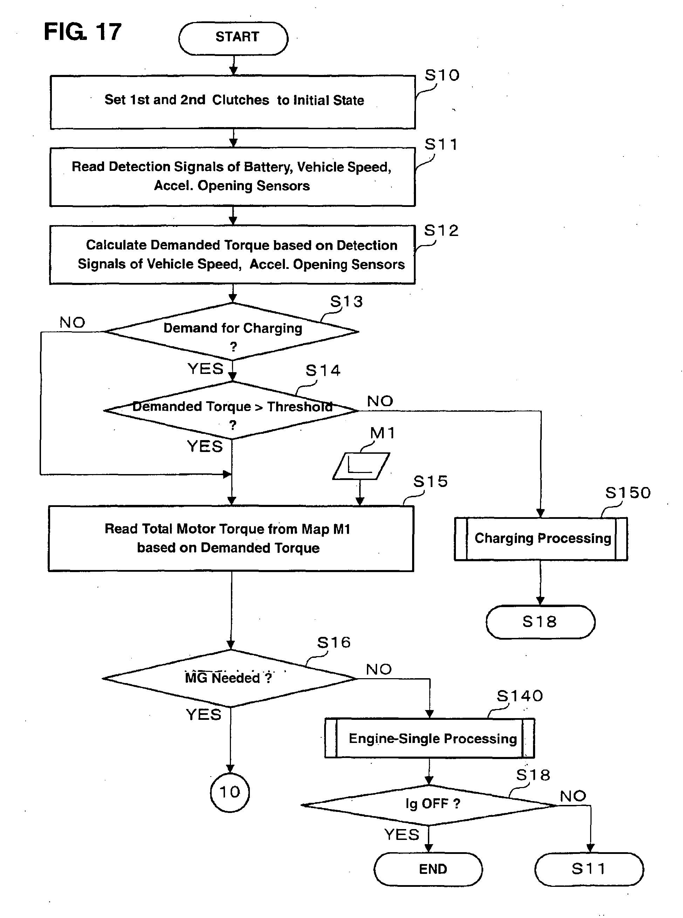

Next, an exemplified driving control of the hybrid vehicle according to the second embodiment will be described referring to FIGS. **17** - **29****.**

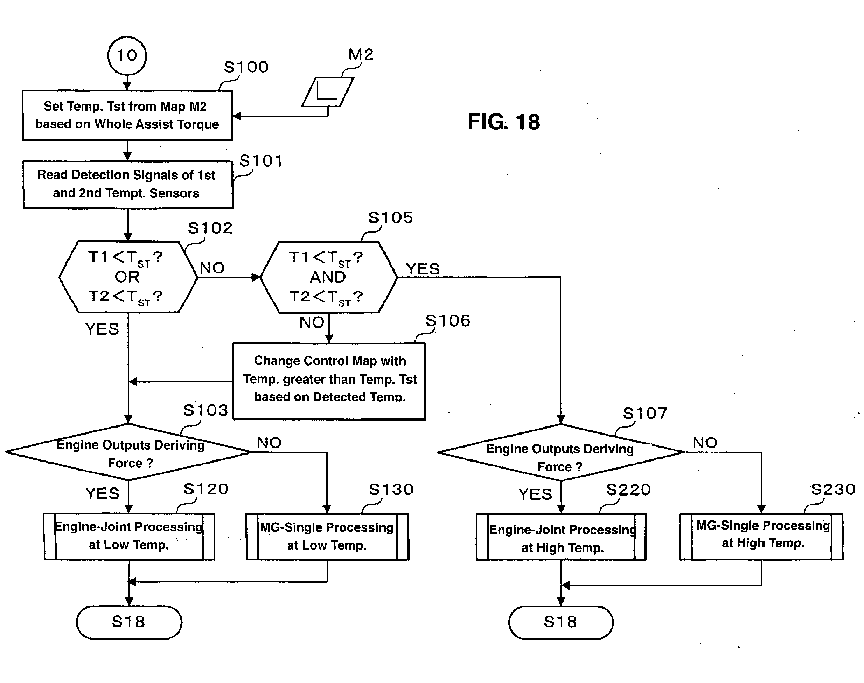

FIGS. **17** and **18** are flowcharts showing the exemplified driving control of the hybrid vehicle according to the second embodiment of the present invention.

Referring to FIG. **17**, this flowchart is executed by the PCM 50 when the ignition switch of the hybrid vehicle **1** is turned on.

When the ignition switch is turned on, the PCM 50 executes the processing of the steps **S10** - **S16** like the first embodiment.

When it is determined that the demanded torque exceeds the specified (predetermined or predeterminable) threshold in the step **S14,** the charging processing subroutine (step **S150**), which will be described below, is executed, and the control proceeds to the step **S18**.

When it is determined that any one of the first and second motor generators **MG1**, **MG2** needs to be operated in the step **S16**, the PCM **50** proceeds to a flowchart shown in FIG. **18**.

Meanwhile, when it is determined that none of the first and second motor generators **MG1**, **MG2** needs to be operated, the driving processing subroutine for the engine-single operation (step **S140**) is executed.

After the driving processing subroutine for the engine-single operation (step **S140),** the PCM **50** determines whether the ignition switch is turned OFF or not (step **S18**). When it is determined that it is turned OFF, the processing ends. When it is determined that it is not turned OFF yet, the control proceeds to the step **S11** and repeats the above-described processing.

Next, referring to FIG. **18****,** at the driving area where any one of the motor generators **MG1**, **MG2** is operated, a specified (predetermined or predeterminable) temperature Tₛₜ is set from the control map **M2** particularly based on the whole assist torque (step **S100).** Next, the detection signals of the first and second temperature sensors **SW5, SW6** are read (step **S101**), and it is determined whether any one of the detected temperatures T1, T2 of the motor generators **MG1, MG2** is less than the specified (predetermined or predeterminable) temperature Tₛₜ or not (step **S102**). When both the temperatures T1, T2 of the motor generators **MG1, MG2** is less than the specified (predetermined or predeterminable) temperature Tₛₜ, the PCM **50** determines whether the current driving area is the area where the engine **10** outputs its driving force (step **S103).** When it is determined that the current driving area is the one where the engine **10** outputs its driving force, the PCM **50** executes a driving processing subroutine for an engine-joint operation at a low temperature (step S120). When it is determined that the current driving area is not the one where the engine **10** outputs its driving force, the PCM **50** executes a driving processing subroutine for a motor-generator-single operation at a low temperature (step **S130),** and then proceeds to the step S18.

When it is determined that any one of the detected temperatures T1, T2 of the motor generators **MG1**, **MG2** is the specified (predetermined or predeterminable) temperature Tₛₜ or greater in the step **S102,** the PCM **50** determines whether or not both the temperatures T1, T2 of the motor generators **MG1, MG2** are the specified (predetermined or predeterminable) temperature Tₛₜ or greater (step **S105).**

When it is determined that any one of the detected temperatures T1, T2 of the motor generators **MG1**, **MG2** is less than the specified (predetermined or predeterminable) temperature Tₛₜ in the step **S105,** a motor-load distribution device **56** of the PCM **50** changes the control map (**M11** or **M12**) with the temperature greater than the specified (predetermined or predeterminable) temperature Tₛₜ based on the detected or determined temperature (step **S106**). This setting change of the control map (sifting of coordinates of the temperature axis T) can recognize that the above-described motor generator with the high temperature is inferior in efficiency, and thus the rate of operation of this motor generator will reduce.

When it is determined that both the detected or determined temperatures T1, T2 of the motor generators **MG1**, **MG2** are the specified (predetermined or predeterminable) temperature Tₛₜ or greater in the step S105, the PCM 50 determines whether the current driving area is the area where the engine 10 outputs its driving force or not (step **S107**). When it is determined that the current driving area or condition is the one where the engine **10** outputs its driving force, the PCM **50** executes a driving processing subroutine for an engine-joint operation at a high temperature (step **S220**). When it is determined that the current driving area is not the one where the engine **10** outputs its driving force, the PCM 50 executes a driving processing subroutine for a motor-generator-single operation at a high temperature (step S230), and then proceeds to the step **S18.**

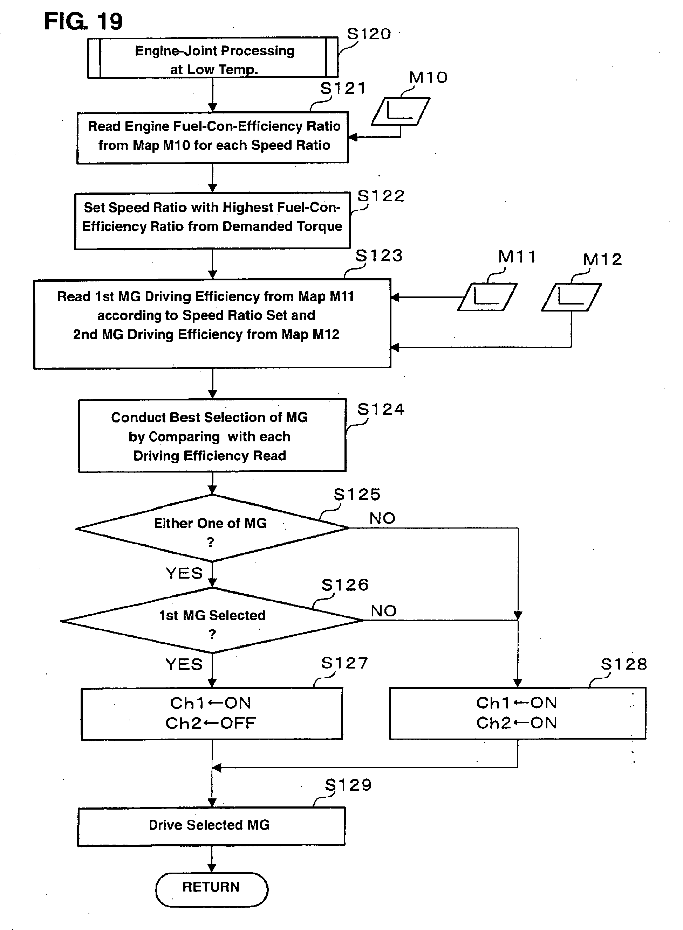

FIG. **19** is a flowchart of the driving processing subroutine for the engine-joint operation at the low temperature (step **S120**) of FIG. **17**.

Referring to FIG. **19**, in the driving processing subroutine for the engine-joint operation at the low temperature, the PCM **50** reads the fuel-consumption-efficiency ratio of the engine 10 from the control map or table or relationship **M10** of the graph of FIG. **14** for each speed ratio (step **S121**). Then, the speed-ratio setting device **53** of the PCM **50** sets the speed ratio having the highest fuel-consumption-efficiency ratio based on the demanded torque calculated in the step **S12** in the main routine (step **S122).** Thereby, the transmission electromagnetic valve **18** is driven, so the speed ratio of the transmission **16** is properly changed according to the control executed in the step **S122.**

Next, the PCM **50** reads the driving efficiency of the first motor generator **MG1** according to the speed ratio set in the step **S122** based on the control map or table or relationship **M11** of the graph of FIG. **15** and also reads the driving efficiency of the second motor generator **MG2** from the control map or table or relationship M12 of the graph of FIG. **16** (step **S123**). The PCM 50 conducts the selection of the motor generators **MG1**, **MG2** particularly by comparing with each driving efficiency read in the step **S123** (step **S124**).

Herein, the PCM **50** calculates the best combined driving efficiency based on the speed ratio set and then selects the motor generator. The "combined driving efficiency" particularly means the driving efficiency that is obtained by distributing the driving efficiency of the first motor generator **MG1** corresponding to the selected speed ratio and the driving efficiency of the second motor generator **MG2** corresponding to the selected speed according to a specified (predetermined or predeterminable) calculation equation in an optimization method, such as a simplex method. Thus, either one or both of the first and second motor generators **MG1**, **MG2** are selected based on the driving state or the charging amount.

Next, the control of the first and second clutches **Ch1**, **Ch2** are executed based on the selection manner of the first and second motor generators MG1, MG2.

Specifically, the PCM **50** determines whether either one or both of the motor generators is selected or not (step **S125**). When either one or both of the first and second motor generators **MG1**, **MG2** is selected, further determination as to whether the selected one is the first motor generator **MG1** or not is conducted (step **S126).** When that is the first motor generator **MG1**, the clutch control device **54** of the PCM **50** connects the first clutch **Ch1** and disconnects the second clutch **Ch2** (step **S127**).

Meanwhile, when both the first and second motor generators **MG1**, **MG2** are selected in the step **S125**, or when only the second motor generator **MG2** is selected in step **S126**, the clutch control device **54** of the PCM **50** connects both the first and second clutches **Ch1, Ch2** (step **S128).**

Then, the selected motor generator is driven (step **S129**), and the control returns to the main routine.

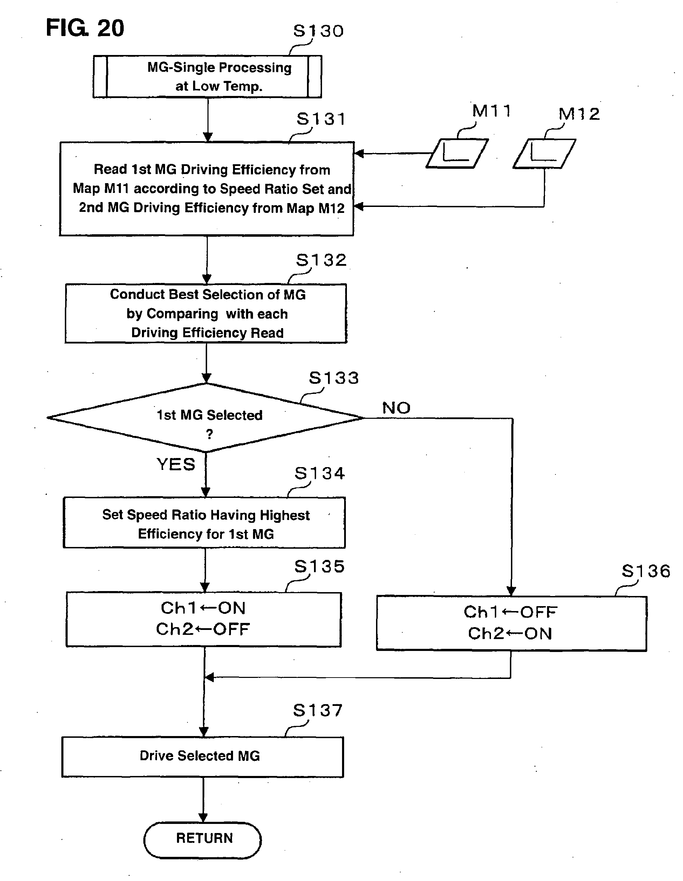

FIG. **20** is a flowchart of the driving processing subroutine for the motor-single operation at the low temperature (step **S130)** of FIG. **17**.

Referring to FIG. **20**, in the driving processing subroutine for the motor-single operation at the low temperature, the PCM **50** reads the driving efficiency of the first motor generator **MG1** according to each speed ratio from the control map or table or relationship **M11** of the graph of FIG. **15**, and reads the driving efficiency of the second motor generator **MG2** from the control map or table or relationship **M12** of the graph of FIG. **16** (step **S131**). The PCM **50** compares each driving efficiency read in the step **S131** and thereby conducts the selection of the motor generators **MG1**, **MG2** (step **S132**).

Then, it is determined whether the selected one is the first motor generator **MG1** or not (step **S133**). When that is the first motor generator **MG1**, the speed-ratio setting device **53** of the PCM **50** sets the speed ratio having the highest driving efficiency for the first motor generator **MG1** particularly based on the demanded torque calculated in the step **S12** in the main routine (step **S134**). Thereby, the transmission electromagnetic valve **18** is driven, so the speed ratio of the transmission **16** is properly changed according to the control executed in the step **S132**. Then, the clutch control device **54** of the PCM **50** connects the first clutch **Ch1** and disconnects the second clutch **Ch2** (step **S135**).

Meanwhile, when the answer of the determination of the step **S133** is NO, that is, when the second motor generator **MG2** is selected, the clutch control device 54 of the PCM **50** disconnects the first clutch **Ch1** and connects the second clutch **Ch2** (step **S136**).

After the steps **S135**, **S136**, the selected motor generator(s) is(are) driven (step S137), and the control returns to the main routine.

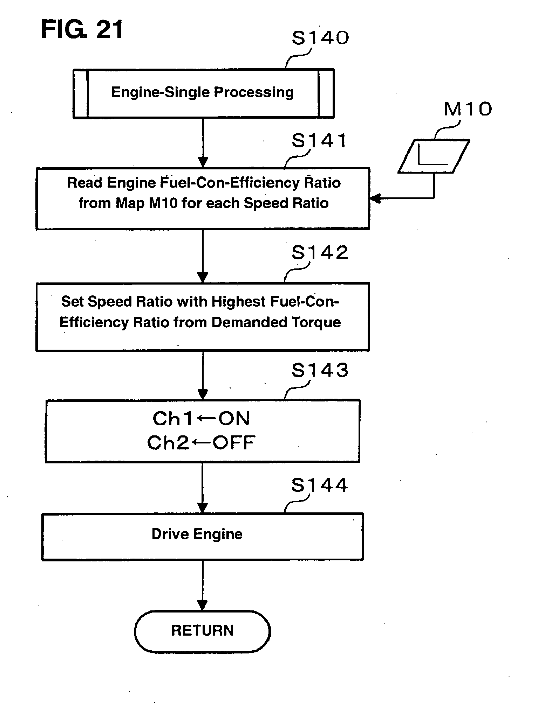

FIG. **21** is a flowchart of the driving processing subroutine for the engine-single operation (step **S140**) of FIG. **17**.

Referring to FIG. **21**, in the driving processing subroutine for the engine-single operation, the PCM **50** reads the fuel-consumption-efficiency ratio of the engine **10** for each speed ratio from the control map or table or relationship **M10** of the graph of FIG. **14** (step **S141**).

Then, the speed-ratio setting device 53 of the PCM **50** sets the speed ratio having the highest fuel-consumption-efficiency ratio based on the demanded torque calculated in the step **S12** in the main routine (step **S142**). Thereby, the transmission electromagnetic valve **18** is driven, so the speed ratio of the transmission **16** is properly changed according to the control executed in the step **S142**.

Next, the clutch control device **54** of the PCM **50** connects the first clutch **Ch1** and disconnects the second clutch **Ch2** (step **S143**).

After this, the engine **10** is driven (step **S144**), and the control returns to the main routine.

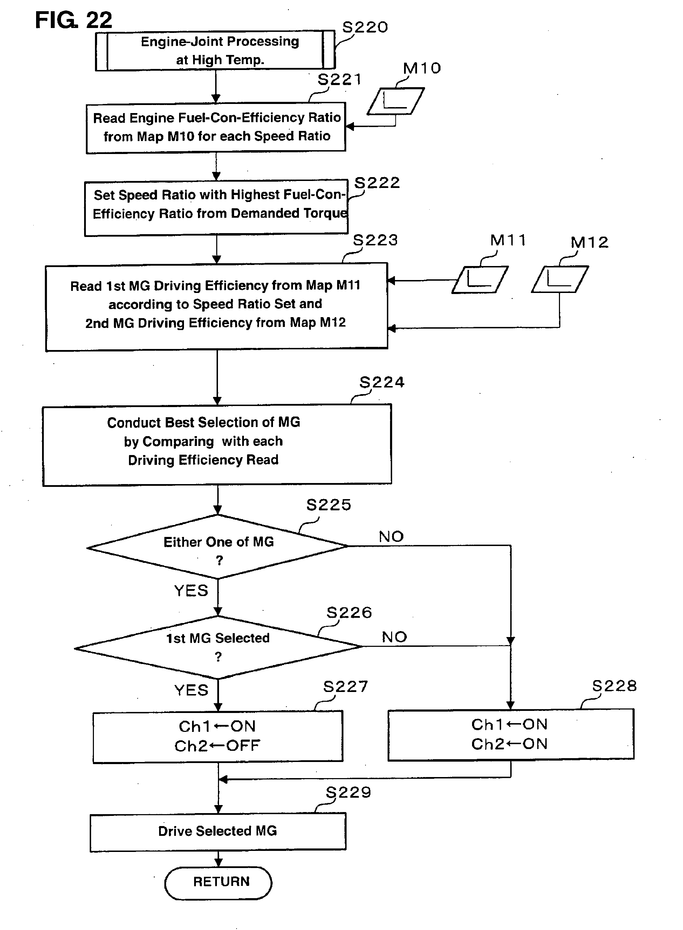

FIG. **22** is a flowchart of the charging processing subroutine at the high temperature (step **S220**) of FIG. **17****.**

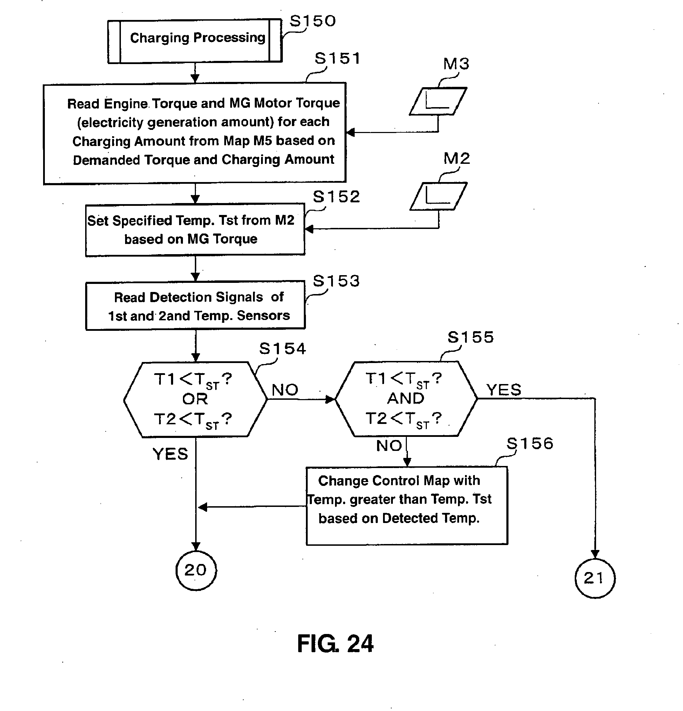

Referring to FIG. **22**, in the charging processing subroutine at the high temperature, the PCM **50** reads the engine torque and the motor torque (electricity generation amount) for each charging amount from the charging control map or table or relationship **M10** related to the graph of FIG. **24** (step **S221**). Next, the speed-ratio setting device **53** of the PCM **50** sets the speed ratio having the highest fuel-consumption-efficiency ratio based on the demanded torque calculated in the step **S22** of the main routine (step **S222**). Thereby, the transmission electromagnetic valve **18** is driven, so the speed ratio of the transmission **16** is properly changed according to the control executed in the step **S222**.

Next, the PCM **50** reads the driving efficiency of the first motor generator **MG1** according to each speed ratio set in the step **S222** from the control map or table or relationship **M11** of the graph of FIG. **15**, and reads the driving efficiency of the second motor generator MG2 from the control map or table or relationship **M12** of the graph of FIG. **16** (step **S223**). The PCM **50** calculates the best combination efficiency based on the set speed ratio based on the torques read in this step **S223** and selects the motor generator (step **S224**). This selection is executed by distributing the rotational speed for the demanded torque of the first motor generator **MG1** and the rotational speed for the demanded torque of the second motor generator **MG2** according to a specified (predetermined or predeterminable) calculation equation in an optimization method, such as the simplex method. Thus, either one or both of the first and second motor generators **MG1**, **MG2** are selected based on the rotational speed through these steps. Thereby, even if both the motor generators **MG1**, **MG2** have the higher temperature and the current driving area or condition is the one where at least one of the motor generators **MG1**, **MG2** needs to be operated, the drop of the driving efficiency can be prevented as much as possible and thus the necessary amount of torque can be maintained.

Next, the control of the first and second clutches **Ch1**, **Ch2** are executed based on the selection manner of the first and second motor generators **MG1**, **MG2**.

First, the PCM **50** determines whether either one or both of the motor generators is selected or not (step **S225**). When either one or both of the first and second motor generators **MG1**, **MG2** is selected, further determination as to whether the selected one is the first motor generator **MG1** or not is conducted (step **S226).** When that is the first motor generator **MG1**, the clutch control device **54** of the PCM **50** connects the first clutch Ch1 and disconnects the second clutch Ch2 (step **S227**).

Meanwhile, when both the first and second motor generators **MG1**, **MG2** are selected in the step **S225**, or when only the second motor generator **MG2** is selected in the step **S226**, the clutch control device **54** of the PCM **50** connects both the first and second clutches Ch1, Ch2 (step S228).

Then, the selected motor generator is operated as the driving source (step **S229**), and the control returns to the main routine.

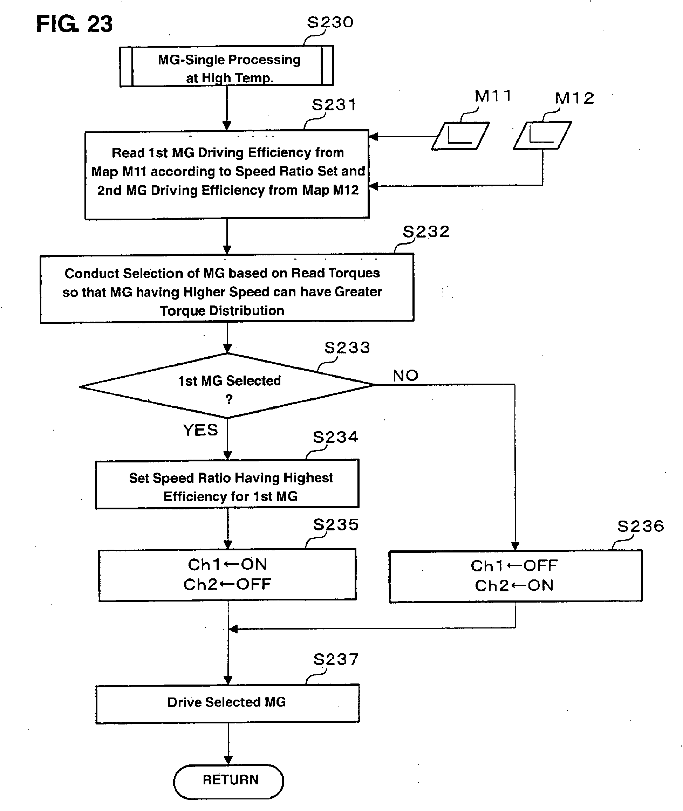

FIG. **23** is a flowchart of the driving processing subroutine for the motor-single operation at the high temperature (step **S230**) of FIG. **17**.

Referring to FIG. **23**, in the driving processing subroutine for the motor-single operation at the high temperature, the PCM 50 reads the driving efficiency of the first motor generator **MG1** according to each speed ratio from the control map or table or relationship **M11** of the graph of FIG. **15****,** and reads the driving efficiency of the second motor generator **MG2** from the control map or table or relationship **M12** of the graph of FIG. **16** (step **S231**). The motor-load distribution device **56** of the PCM **50** conducts the selection of the motor generators **MG1**, **MG2** based on the respective torques read in this step **S231** so that the motor generator having the higher rotational speed can have the greater torque distribution (step **S232**). Thereby, even if the current driving area is the one where both the motor generators **MG1**, **MG2** have the high temperature, the load distribution rate of the motor generator having the higher driving efficiency is increased (in other words, the load distribution rate of the motor generator having the lower driving efficiency is reduced), so the drop of the driving efficiency can be prevented as much as possible and thus the necessary amount of torque can be maintained.

Then, it is determined whether the selected one is the first motor generator **MG1** or not (step **S233**). When that is the first motor generator **MG1**, the speed-ratio setting device **53** of the PCM **50** sets the speed ratio having the highest driving efficiency for the first motor generator MG1 (step **S234**). Thereby, the transmission electromagnetic valve **18** is driven, so the speed ratio of the transmission **16** is properly changed according to the control executed in the step **S232**. Then, the clutch control device **54** of the PCM **50** connects the first clutch **Ch1** and disconnects the second clutch **Ch2** (step **S235**).

Meanwhile, when the answer of the determination of the step **S233** is NO, that is, when the second motor generator **MG2** is selected, the clutch control device **54** of the PCM **50** disconnects the first clutch **Ch1** and connects the second clutch **Ch2** (step **S236**).

After the steps **S235**, **S236**, the selected motor generator is driven (step S237), and the control returns to the main routine.

FIGS. **24 - 26** are flowcharts of the charging processing subroutine (step **S150**) of FIG. **17****.**

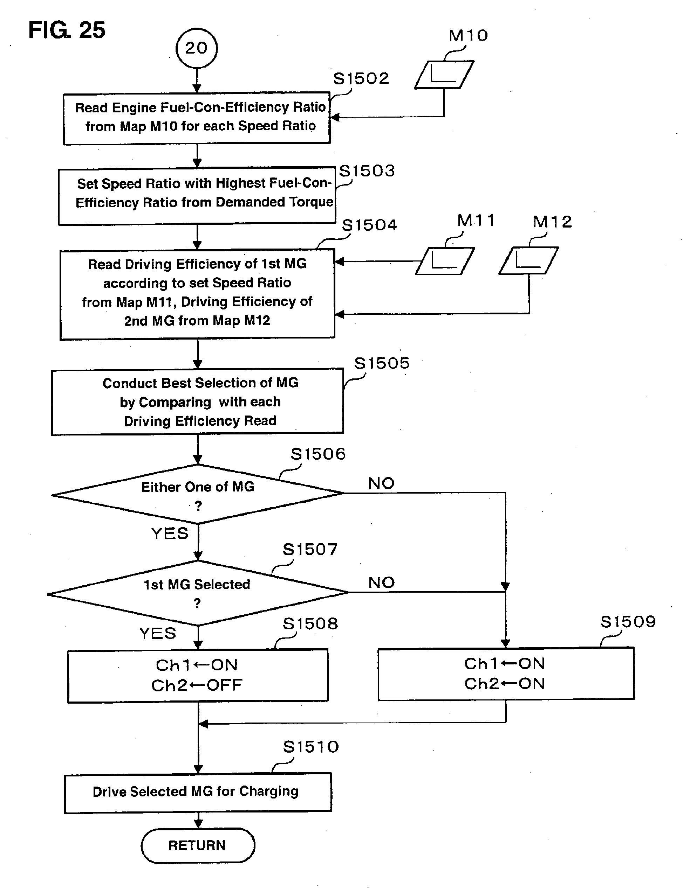

Referring to FIG. **24**, in the charging processing subroutine, the PCM **50** reads the engine torque and the motor torque (electricity generation amount) for each charging amount from the charging control map or table or relationship **M5**, based on the demanded torque and the charging amount that are results of the steps **S11**, **S12** of the main routine (step **S151**). Next, the PCM **50** sets the specified (predetermined or predeterminable) temperature Tₛₜ from the control map **M2** based on the whole assist torque (step **S152).** Next, the detection signals of the first and second temperature sensors **SW5, SW6** are read (step **S153),** and it is determined whether any one of the detected temperatures T1, T2 of the motor generators **MG1, MG2** is less than the specified (predetermined or predeterminable) temperature Tₛₜ or not (step **S154).** When both the temperatures T1, T2 of the motor generators **MG1, MG2** is less than the specified (predetermined or predeterminable) temperature T_{st,} the PCM **50** executes processing shown in FIG. **25**.

When it is determined that any one of the detected temperatures T1, T2 of the motor generators **MG1**, **MG2** is the specified (predetermined or predeterminable) temperature Tₛₜ or greater in the step **S154**, the PCM **50** determines whether or not both the temperatures T1, T2 of the motor generators **MG1, MG2** are the specified (predetermined or predeterminable) temperature Tₛₜ or greater (step **S155**).

When it is determined that any one of the detected temperatures T1, T2 of the motor generators **MG1**, **MG2** is less than the specified (predetermined or predeterminable) temperature Tₛₜ in the step **S155**, the motor-load distribution device **56** of the PCM **50** changes the control map or table or relationship (**M11** or **M12**) with the temperature greater than the specified (predetermined or predeterminable) temperature Tₛₜ based on the detected temperature (step **S156**). This setting change of the control map can recognize that the above-described motor generator with the high temperature is inferior in efficiency, and thus the rate of operation of this motor generator will reduces.

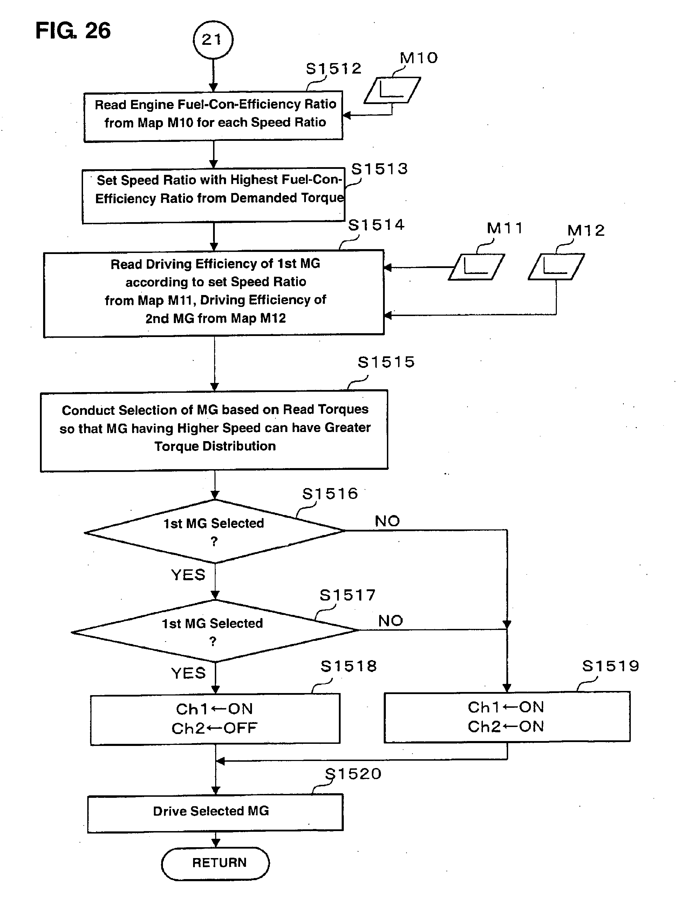

When it is determined that both the detected temperatures T1, T2 of the motor generators **MG1**, **MG2** are the specified (predetermined or predeterminable) temperature Tₛₜ or greater in the step **S155,** the PCM **50** executes the processing shown in FIG. **26****.**

Referring to FIG. **25**, when it is determined that any one of the detected temperatures T1, T2 of the motor generators **MG1**, **MG2** is less than the specified (predetermined or predeterminable) temperature Tₛₜ in the step **S154** of FIG. **24**, the PCM **50** reads the fuel-consumption-efficiency ratio of the engine 10 for each speed ratio from the control map or table or relationship **M10** (step **S1502**). Next, the speed-ratio setting device **53** of the PCM **50** sets the speed ratio having the highest fuel-consumption-efficiency ratio (step **S1503**). Thereby, the transmission electromagnetic valve **18** is driven, so the speed ratio of the transmission 16 is properly changed according to the control executed in the step **S1503.**

Next, the PCM **50** reads the driving efficiency of the first motor generator **MG1** according to each speed ratio set in the step **S1503** from the control map or table or relationship **M11,** and reads the driving efficiency of the second motor generator **MG2** from the control map or table or relationship **M12** (step **S1504**). The PCM **50** compares each driving efficiency read in the step **S1504** and thereby conducts the selection of the motor generators **MG1**, **MG2** (step **S1505**). Herein, the PCM **50** calculates the best combination efficiency based on the set speed ratio, and selects the motor generator. Thus, either one or both of the first and second motor generators **MG1**, **MG2** are selected based on the driving state or the charging amount. Herein, since the control map of the motor generator having the temperature of Tₛₜ or greater is changed to the map having the lower driving efficiency in the step **S156** of FIG. **24**, the selection of the motor generators or the load distribution are executed in the step S1505 so that the load of the motor generator having the higher driving efficiency increases.

Next, the control of the first and second clutches **Ch1**, **Ch2** are executed based on the selection manner of the first and second motor generators **MG1**, **MG2**.

First, the PCM **50** determines whether either one or both of the motor generators is selected or not (step S1506). When either one or both of the first and second motor generators **MG1**, **MG2** is selected, further determination as to whether the selected one is the first motor generator **MG1** or not is conducted (step **S1507**). When that is the first motor generator **MG1**, the clutch control device **54** of the PCM **50** connects the first clutch **Ch1** and disconnects the second clutch **Ch2** (step **S1508**).

Meanwhile, when both the first and second motor generators **MG1, MG2** are selected in the step **S1505**, or when only the second motor generator **MG2** is selected in the step **S1507,** the clutch control device **54** of the PCM **50** connects both the first and second clutches **Ch1**, **Ch2** (step **S1509**).

Then, the selected motor generator is operated as the driving source for the charging (step **S1510**), and the control returns to the main routine.

Referring to FIG. **26**, when it is determined that both the detected temperatures T1, T2 of the motor generators **MG1**, **MG2** is the specified (predetermined or predeterminable) temperature Tₛₜ or greater in the step **S155** of FIG. **24**, the PCM 50 reads the fuel-consumption-efficiency ratio of the engine **10** for each speed ratio from the control map or table or relationship **M10** (step **S1512).** Next, the speed-ratio setting device **53** of the PCM 50 sets the speed ratio having the highest fuel-consumption-efficiency ratio (step **S1513).** Thereby, the transmission electromagnetic valve 18 is driven or controlled, so the speed ratio of the transmission **16** is properly changed according to the control executed in the step **S1503**.

Next, the PCM **50** reads the torque of the first motor generator **MG1** according to each speed ratio set in the step **S1513** from the control map or table or relationship **M11**, and reads the torque of the second motor generator **MG2** from the control map or table or relationship **M12** (step **S1514**). The motor-load distribution device **56** of the PCM **50** conducts the selection of the motor generators **MG1**, **MG2** based on the respective torques read in this step **S1514** for each speed ratio so that the motor generator having the higher rotational speed can have the greater torque distribution (step **S1515).** Thereby, either one or both of the first and second motor generators **MG1**, **MG2** are selected based on the rotational speed. Thus, the motor generator having less copper wear can be operated, so that the necessary torque can be maintained as a whole and a power loss due to the drop of the driving efficiency can be prevented.

Next, the PCM **50** determines whether either one or both of the motor generators is selected or not (step **S1516**). When either one of the first and second motor generators **MG1**, **MG2** is selected, further determination as to whether the selected one is the first motor generator **MG1** or not is conducted (step **S1517**). When that is the first motor generator MG1, the clutch control device **54** of the PCM **50** connects the first clutch **Ch1** and disconnects the second clutch **Ch2** (step **S1518**).

Meanwhile, when both the first and second motor generators **MG1**, **MG2** are selected in the step **S1516**, or when only the second motor generator **MG2** is selected in the step **S1517**, the clutch control device **54** of the PCM **50** connects both the first and second clutches **Ch1**, **Ch2** (step **S1519**).

Then, the selected motor generator is driven as the driving source for the charging (step **S1520**), and the control returns to the main routine.

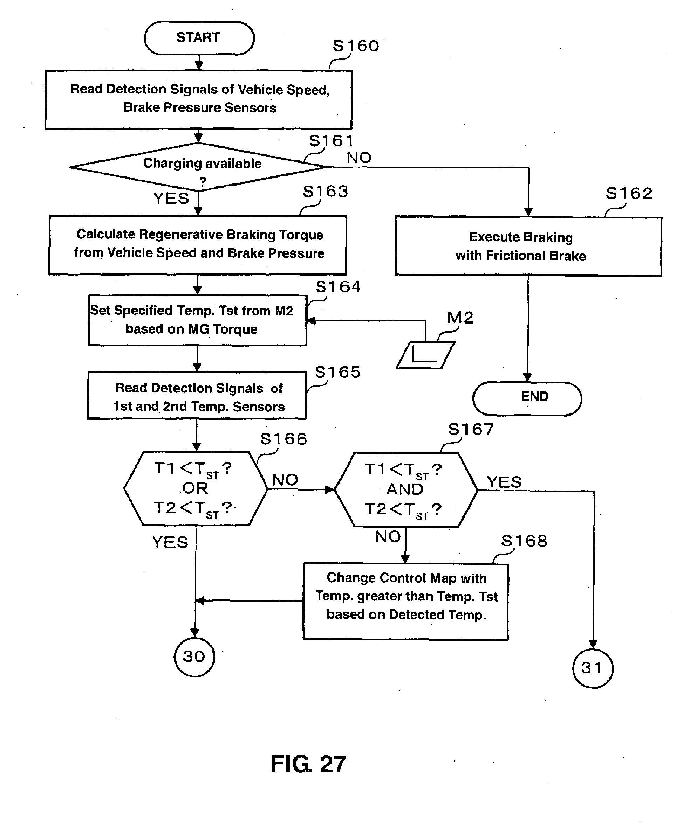

FIGS. **27** - **29** are flowcharts of an example of regeneration processing at the vehicle deceleration according to the second embodiment.

Referring to FIG. **27**, the second embodiment is also configured so that when the vehicle deceleration of the hybrid vehicle **1** is demanded, the regeneration processing of braking and charging of the vehicle by using the first and second motor generators **MG1**, **MG2** is executed under a specified (predetermined or predeterminable) driving state or condition.

The PCM **50**, in the regeneration processing, first reads the detection signals of the vehicle speed sensor **SW2** and the brake pressure sensor **SW4** (step **S160**) and determines availability of the regeneration processing.

Next, availability of charging is determined based on the detection signal of the battery sensor **SW1** in order not to be overcharging of the battery (step **S161**)**.** When the charging is not available, the brake control device **55** controls the brake control system **35** to execute the braking control with a frictional brake (step **S162**). Then, the control ends.

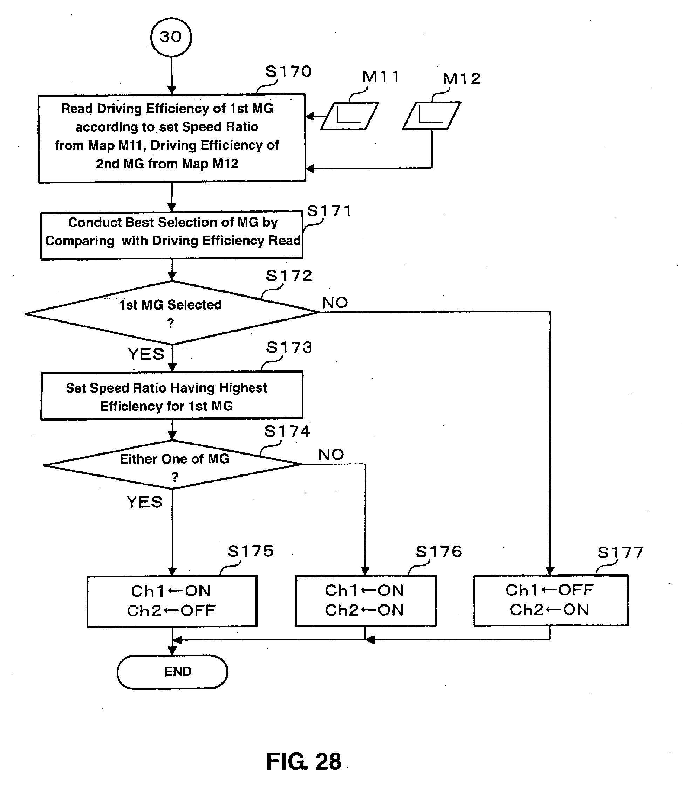

When the charging is available, the PCM **50** calculates a regenerative braking torque based on the vehicle speed and the brake pressure read in the step **S160** (step **S163**). Next, the PCM **50** sets the specified (predetermined or predeterminable) temperature Tₛₜ from the control map or table or relationship **M2** based on the whole regenerative braking torque (step **S164**). Next, the detection signals of the first and second temperature sensors **SW5**, **SW6** are read (step **S165**), and it is determined whether any one of the detected temperatures T1, T2 of the motor generators **MG1**, **MG2** is less than the specified (predetermined or predeterminable) temperature Tₛₜ or not (step **S166**). When both the temperatures T1, T2 of the motor generators **MG1**, **MG2** is less than the specified (predetermined or predeterminable) temperature Tₛₜ, the PCM **50** executes processing shown in FIG. **28**.

When it is determined that any one of the detected or determined temperatures T1, T2 of the motor generators **MG1**, **MG2** is the specified (predetermined or predeterminable) temperature Tₛₜ or greater in the step S166, the PCM **50** determines whether or not both the temperatures T1, T2 of the motor generators **MG1**, **MG2** are the specified (predetermined or predeterminable) temperature Tₛₜ or greater (step **S167**).

When it is determined that any one of the detected temperatures T1, T2 of the motor generators **MG1**, **MG2** is less than the specified (predetermined or predeterminable) temperature Tₛₜ in the step **S167**, the motor-load distribution device **56** of the PCM **50** changes the control map or table or relationship (**M11** or **M12**) with the temperature greater than the specified (predetermined or predeterminable) temperature Tₛₜ based on the detected or determined temperature (step **S168**). This setting change of the control map can recognize that the above-described motor generator with the high temperature is inferior in efficiency, and thus the rate of operation of this motor generator will reduces.

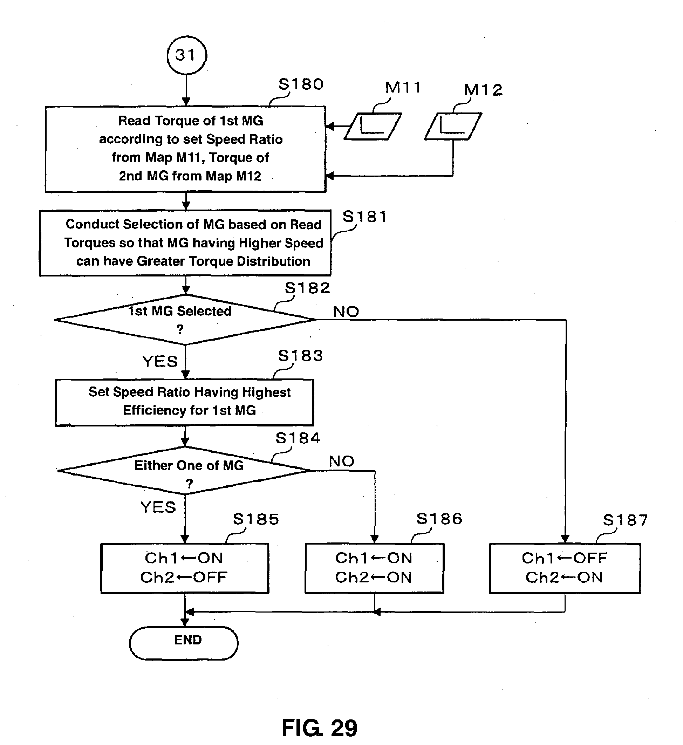

When it is determined that both the detected temperatures T1, T2 of the motor generators **MG1**, **MG2** are the specified (predetermined or predeterminable) temperature Tₛₜ or greater in the step **S167**, the PCM **50** executes the processing shown in FIG. **29**.

Next, referring to FIG. **28**, when it is determined that both the detected temperatures **T1**, **T2** of the motor generators **MG1**, **MG2** are less than the specified (predetermined or predeterminable) temperature Tₛₜ in the step **S167** of FIG. **27**, the PCM **50** reads the driving efficiency of the first motor generator **MG1** according to each speed ratio from the control map or table or relationship **M11**, and reads the driving efficiency of the second motor generator **MG2** from the control map or table or relationship **M12** (step **S170**). The PCM **50** compares each driving efficiency read in the step **S170** and thereby conducts the selection of the motor generators **MG1**, **MG2** (step **S171**).

Then, the control of the first and second clutches **Ch1, Ch2** is conducted by the selection manner of the motor generators **MG1**, **MG2**.

In the regeneration processing, it is determined by the PCM **50** whether the selected one is the first motor generator **MG1** or not (step **S172**). When that is the first motor generator **MG1**, the speed-ratio setting device **53** of the PCM **50** sets the speed ratio having the highest driving efficiency for the first motor generator **MG1** (step **S173**). Thereby, the transmission electromagnetic valve **18** is driven, so the speed ratio of the transmission 16 is properly changed according to the control executed in the step **S67.**

Next, the PCM **50** determines whether only the first motor generator **MG1** is selected or not (step **S174).**

When only the first motor generator **MG1** is selected, the clutch control device **54** of the PCM **50** connects the first clutch **Ch1** and disconnects the second clutch **Ch2** (step **S175**). After this, the battery **34** is charged by the first motor generator MG1 particularly with the braking of the engine **10**.

Meanwhile, when the second motor generator **MG2** is also selected in the step **S174**, the clutch control device **54** of the PCM **50** connects both the first and second clutches **Ch1**, **Ch2** (step **S176**). Thereby, the battery **34** is charged by both the motor generators **MG1**, **MG2**.

Further, when the selected motor generator in the step **S172** is only the second motor generator **MG2**, the clutch control device **54** of the PCM **50** disconnects the first clutch **Ch1** and disconnects the second clutch **Ch2** (step **S177**). Thereby, the bafttery **34** is charged by the second motor generator **MG2** with the braking of the engine **10**.

Next, referring to FIG. **29**, when it is determined that both the detected or determined temperatures T1, T2 of the motor generators **MG1**, **MG2** are the specified (predetermined or predeterminable) temperature Tₛₜ or greater in the step **S167** of FIG. **27**, the driving-source selection device **52** of the PCM **50** reads the torque of the first motor generator **MG1** according to each speed ratio from the control map or table or relationship **M11**, and reads the torque of the second motor generator **MG2** from the control map or table or relationship **M12** (step **S180**). The motor-load distribution device 56 of the PCM **50** conducts the selection of the motor generators **MG1**, **MG2** based on the torque read in the step **S180** so that the motor generator having the higher rotational speed can have the greater torque distribution (step **S181**).

Then, the control of the first and second clutches **Ch1, Ch2** is conducted by the selection manner of the motor generators **MG1**, **MG2**.

In the regeneration processing, it is determined by the PCM **50** whether the selected one is the first motor generator **MG1** or not (step **S182**). When that is the first motor generator **MG1**, the speed-ratio setting device **53** of the PCM **50** sets the speed ratio having the highest driving efficiency for the first motor generator **MG1** (step **S183**). Thereby, the transmission electromagnetic valve **18** is driven, so the speed ratio of the transmission **16** is properly changed according to the control executed in the step **S67.**

Next, the PCM **50** determines whether only the first motor generator **MG1** is selected or not (step **S184).**

When only the first motor generator **MG1** is selected, the clutch control device **54** of the PCM **50** connects the first clutch **Ch1** and disconnects the second clutch **Ch2** (step **S185**). After this, the battery **34** is charged by the first motor generator **MG1** particularly with the braking of the engine **10**.

Meanwhile, when the second motor generator **MG2** is also selected in the step **S184**, the clutch control device **54** of the PCM **50** connects both the first and second clutches **Ch1**, **Ch2** (step **S186**). Thereby, the battery **34** is charged by both the motor generators **MG1**, **MG2**.

Further, when the selected motor generator in the step **S181** is only the second motor generator **MG2**, the clutch control device **54** of the PCM **50** disconnects the first clutch **Ch1** and disconnects the second clutch **Ch2** (step **S187**). Thereby, the battery **34** is charged by the second motor generator **MG2** particularly with the braking of the engine **10**.

According to the second embodiment, since the distribution of load of the motor generators **MG1**, **MG2** is changed in such a manner that when the temperatures of the motor generators **MG1**, **MG2** is the specified (predetermined or predeterminable) temperature Tₛₜ or greater, the load of the motor generator having the higher temperature is reduced, substantially maintaining the total torque, the damage of the motor generators, such as the copper wear, can be restrained properly maintaining the total torque and the driving efficiency as a whole can be maintained with a lower consumption of electricity.

Further, according to the second embodiment, the motor-load distribution device particularly is configured so that the specific (predetermined or predeterminable) temperature Tₛₜ is adjustable in accordance with demanded load to the motor generators **MG1, MG2** in such a manner that the specific temperature Tₛₜ is adjusted to be lower when the demanded load is greater. There is generally a tendency that the temperature of the motor generator **MG1**, **MG2** increases when the demanded load is greater. Accordingly, since the specific temperature Tₛₜ is or can be adjusted in accordance with the demanded load according to the second embodiment, the decrease of the driving efficiency due to the increase of the temperature can be restrained effectively.

Also, according to the second embodiment, there are provided the generator controller **31** as the first rotational speed detection device operative to detect or determine the rotational speed of the first motor generator **GM1** and the motor controller **33** as the second rotational speed detection device operative to detect or determine the rotational speed of the second motor generator **MG2**, and the motor-load distribution device **56** is configured to increase the distribution of the load of the motor generator having the higher rotational speed when the temperature of the motor generators **MG1**, **MG2** that are selected as the driving source is the specified (predetermined or predeterminable) temperature Tₛₜ or greater. Thereby, the output can be obtained efficiently by increasing the distribution of the load of the motor generator with less copper wear. That is, the damage of the copper wear increases when the motor generator has the higher temperature and higher electricity supply, and the efficiency decrease is primarily influenced by the copper wear damage. Accordingly, the efficiency decrease can be restrained properly by increasing the load distribution of the motor generator having the higher rotational speed.

It should be understood that according to the present invention, a control map or relationship or table may be defined by a continuous or discrete function and/or stored as a discrete elements of a table or multidimensional matrix.

The present invention should not be limited to the above-described embodiments, and any other modifications and improvements may be applied within the scope of a sprit of the present invention.

## Claims

1. A control device of a hybrid vehicle (**1**), comprising:
an engine (**10**) operative to output a driving torque to the vehicle (**1**);
a first motor generator (**MG1**) operative to generate electricity and output a driving torque to the vehicle (**1**), the first motor generator (**MG1**) being coupled to the engine (**10**);
a second motor generator (**MG2**) operative to generate electricity and output a driving torque to the vehicle (**1**);
a battery (**34**) operative to supply electricity to the first and second motor generators (**MG1**, **MG2**), the battery (**34**) being charged by the first and second motor generators (**MG1**, **MG2**);
a driving-state determination device (**51**) operative to determine a driving state of the vehicle (**1**); and
a driving-source selection device (**52**) operative to select at least one driving source from the engine (**10**), the first motor generator (**MG1**), and the second motor generator (**MG2**) based on determination of the driving-state determination device (**51**) so as to provide the highest driving efficiency as a whole of the vehicle (**1**),
wherein the first and second motor generators (**MG1**, **MG2**) are configured so that a high-efficiency driving operation area of the first motor generator (**MG1**) is set on a higher-speed side relative to a high-efficiency driving operation area of the second motor generator (**MG2**).

2. The control device of a hybrid vehicle (**1**) of claim 1, wherein the engine (**10**) and the first motor generator (**MG1**) are coupled to a driving shaft (**21**) of the vehicle (**1**) via a transmission (**16**), and the driving-source selection device (**52**) is configured so as to determine a driving efficiency of the first motor generator (**MG1**) and compare that with a driving efficiency of the second motor generator (**MG2**) for each speed ratio of the transmission (**16**).

3. The control device of a hybrid vehicle (**1**) of claim 2, further comprising a speed-ratio setting device (**53**) operative to set the speed ratio of the transmission (**16**) at a specified speed ratio that enables the first motor generator (**MG1**) to provide a highest driving efficiency thereof when the driving-source selection device (**52**) selects the first motor generator (**MG1**) as the driving source without an operation of the engine (**10**).

4. The control device of a hybrid vehicle (**1**) of claim 3, wherein the speed-ratio setting device (**53**) is configured to set the speed ratio of the transmission (**16**) at a specified speed ratio that enables a fuel-consumption efficiency of the engine (**10**) to provide a highest efficiency when the driving-source selection device (**52**) selects the engine (**10**) and the first motor generator (**MG1**) as the driving source.

5. The control device of a hybrid vehicle (**1**) of any one of claims 2 through 4, wherein a motor output shaft (**32**) of the second motor generator (**MG2**) is coupled to an output shaft (**19**) of the transmission (**16**), a first clutch (**Ch1**) is provided between the first motor generator (**MG1**) and the transmission (**16**), a second clutch (**Ch2**) is provided at the motor output shaft (**32**) of the second motor generator (**MG2**), and there is provided a clutch control device (**54**) operative to control the first and second clutches (**Ch1**, **Ch2**) so as to disconnect the first clutch (**Ch1**) when the driving-source selection device (**52**) selects only the second motor generator (**MG2**) as the driving source and to disconnect the second clutch (**Ch2**) when the driving-source selection device (**52**) excludes the second motor generator (**MG2**) from the driving source.

6. The control device of a hybrid vehicle (**1**) of any one of the preceding claims, further comprising:
a first temperature detection device (**SW5**) operative to detect or determine a temperature of the first motor generator (**MG1**);
a second temperature detection device (**SW6**) operative to detect or determine a temperature of the second motor generator (**MG2**); and
a motor-load distribution device (**56**) operative to determine or determine each temperature state of the first and second motor generators (**MG1**, **MG2**) based on detection signals of the first and second temperature detection devices (**SW5**, **SW6**) and to change distribution of load of the motor generators (**MG1**, **MG2**) in such a manner that when the temperature of the motor generators (**MG1**, **MG2**) that are selected as the driving source is a specified temperature or greater, the load of the motor generator having a higher temperature is reduced, substantially maintaining a total torque.

7. The control device of a hybrid vehicle (**1**) of claim 6, wherein the motor-load distribution device (**56**) is configured so that the specific temperature is adjustable in accordance with demanded load to the motor generators (**MG1**, **MG2**) in such a manner that the specific temperature is adjusted to be lower when the demanded load is greater.

8. The control device of a hybrid vehicle (**1**) of claim 6 or 7, wherein there are provided a first rotational speed detection device (**31**) operative to detect or determine a rotational speed of the first motor generator (**MG1**) and a second rotational speed detection device (**33**) operative to detect or determine a rotational speed of the second motor generator (**MG2**), and the motor-load distribution device (56) is configured to increase the distribution of the load of the motor generator having a higher rotational speed when the temperature of the motor generators (**MG1**, **MG2**) that are selected as the driving source is a specified temperature or greater.

9. A control method of a hybrid vehicle (**1**) that includes an engine (**10**) operative to output a driving torque to the vehicle (**1**), a first motor generator (**MG1**) operative to generate electricity and output a driving torque to the vehicle (**1**), the first motor generator (**MG1**) being coupled to the engine (**10**), a second motor generator (**MG2**) operative to generate electricity and output a driving torque to the vehicle (**1**), a high-efficiency driving operation area of the second motor generator (**MG2**) being set on a lower-speed side relative to a high-efficiency driving operation area of the first motor generator (**MG1**), and a battery (**34**) operative to supply electricity to the first and second motor generators (**MG1**, **MG2**), the battery (**34**) being charged by the first and second motor generators (**MG1**, **MG2**), the control method comprising:
a first step of selecting at least one driving source from the engine (**10**), the first motor generator (**MG1**), and the second motor generator (**MG2**) so as to provide the highest driving efficiency as a whole of the vehicle (**1**); and
a second step of operate the selected driving source that is selected by the first step.

10. The control method of a hybrid vehicle (**1**) of claim 9, wherein the engine (**10**) and the first motor generator (**MG1**) are coupled to a driving shaft (**21**) of the vehicle (**1**) via a transmission (16), and the first step comprises a step of determining a driving efficiency of the first motor generator (**MG1**) and comparing that with a driving efficiency of the second motor generator (**MG2**) for each speed ratio of the transmission (**16**).

11. The control method of a hybrid vehicle (**1**) of claim 10, further comprising a third step of setting the speed ratio of the transmission (**16**) at a specified speed ratio that enables the first motor generator (**MG1**) to provide a highest driving efficiency thereof when the first motor generator (**MG1**) is selected as the driving source in the first step.

12. The control method of a hybrid vehicle (**1**) of claim 11, wherein the third step is configured to set the speed ratio of the transmission (**16**) at a specified speed ratio that enables a fuel-consumption efficiency of the engine (**10**) to provide a highest efficiency when the engine (**10**) and the first motor generator (**MG1**) are selected as the driving source in the first step.

13. The control method of a hybrid vehicle (**1**) of any one of claims 10 through 12, wherein a motor output shaft (**32**) of the second motor generator (**MG2**) is coupled to an output shaft (**19**) of the transmission (**16**), a first clutch (**Ch1**) is provided between the first motor generator (MG1) and the transmission (**16**), a second clutch (**Ch2**) is provided at the motor output shaft (**32**) of the second motor generator (**MG2**), and there is provided a clutch control device (**54**) operative to control the first and second clutches (**Ch1**, **Ch2**) so as to disconnect the first clutch (**Ch1**) when only the second motor generator (**MG2**) is selected as the driving source in the first step and to disconnect the second clutch (Ch2) when the second motor generator (**MG2**) is not selected as the driving source in the first step.

14. The control method of a hybrid vehicle (**1**) of any one of claims 9 through 13, wherein the hybrid vehicle (**1**) further comprises a first temperature detection device (**SW5**) operative to detect or determine a temperature of the first motor generator (**MG1**), and a second temperature detection device (**SW6**) operative to detect or determine a temperature of the second motor generator (**MG2**), and there is provided a fourth step of determining each temperature state of the first and second motor generators (**MG1**, **MG2**) based on detection signals of the first and second temperature detection devices (**SW5**, **SW6**) and changing distribution of load of the motor generators (**MG1**, **MG2**) in such a manner that when the temperature of the motor generators (**MG1**, **MG2**) that are selected as the driving source is a specified temperature or greater, the load of the motor generator having a higher temperature is reduced, substantially maintaining a total torque.

15. The control method of a hybrid vehicle (**1**) of claim 14, wherein the fourth step is configured so that the specific temperature is adjustable in accordance with demanded load to the motor generators (**MG1**, **MG2**) in such a manner that the specific temperature is adjusted to be lower when the demanded load is greater.

16. The control method of a hybrid vehicle (**1**) of claim 14 or 15, wherein the hybrid vehicle (**1**) further comprises a first rotational speed detection device (**31**) operative to detect or determine a rotational speed of the first motor generator (**MG1**) and a second rotational speed detection device (**33**) operative to detect or determine a rotational speed of the second motor generator (**MG2**), and the fourth step is configured to increase the distribution of the load of the motor generator having a higher rotational speed when the temperature of the motor generators (**MG1**, **MG2**) that are selected as the driving source is a specified temperature or greater.

17. A computer program product comprising computer-readable instructions which when loaded and executed on a suitable system perform the steps of a control method of a hybrid vehicle (**1**) of any one of claims 9 through 16.
